(19) Europäisches Patentamt
European Patent Office
Office européen des brevets

(11) **EP 3 681 946 B1**

(12) **EUROPEAN PATENT SPECIFICATION**

(45) Date of publication and mention
of the grant of the patent:
**18.02.2026 Bulletin 2026/08**

(21) Application number: **18778725.4**

(22) Date of filing: **06.09.2018**

(51) International Patent Classification (IPC):
**C08L 23/08** *(2025.01)*

(52) Cooperative Patent Classification (CPC):
(C-Sets available)
**C08L 23/0815; C08F 210/16;** C08L 2205/025;
C08L 2555/54 (Cont.)

(86) International application number:
**PCT/US2018/049635**

(87) International publication number:
**WO 2019/051006 (14.03.2019 Gazette 2019/11)**

(54) **CARBON BLACK-CONTAINING BIMODAL POLYETHYLENE COMPOSITION**

RUSSHALTIGE BIMODALE POLYETHYLENZUSAMMENSETZUNG

COMPOSITION DE POLYÉTHYLÈNE BIMODAL CONTENANT DU NOIR DE CARBONE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **11.09.2017 US 201762556590 P
29.11.2017 US 201762591865 P**

(43) Date of publication of application:
**22.07.2020 Bulletin 2020/30**

(73) Proprietor: **Univation Technologies, LLC
Houston, TX 77056 (US)**

(72) Inventors:
• **BORSE, Nitin
Lake Jackson, TX 77566 (US)**
• **CHANDAK, Swapnil B.
Lake Jackson, TX 77566 (US)**

• **ZHANG, Yi
South Charleston, WV 25303 (US)**
• **LYNN, Timothy R.
Glen Gardner, NJ 08826 (US)**
• **KUHLMAN, Roger L.
Lake Jackson, TX 77566 (US)**
• **SZUL, John F.
South Charleston, WV 25303 (US)**

(74) Representative: **Boult Wade Tennant LLP
Salisbury Square House
8 Salisbury Square
London EC4Y 8AP (GB)**

(56) References cited:
WO-A1-2016/172567    CA-A1- 2 871 463
US-A1- 2006 036 041    US-A1- 2007 010 616
US-A1- 2010 240 818    US-B1- 6 828 395

EP 3 681 946 B1

(52) Cooperative Patent Classification (CPC): (Cont.)

C-Sets
**C08L 23/0815, C08L 23/0815, C08K 3/04**

**Description**

FIELD

Polyethylene compositions and articles, and methods of making and using same.

INTRODUCTION

Patents and applications in the field include CA 2427685 A1; US 2005/0054790 A1; US 2015/0017365 A1; US 7,250,473 B2; US 7,576,166 B2; US 7,897,710 B2; US 8,008,403 B2; US 8,846,188 B2; US 8,957,158 B2; US 9,017,784 B2; US 9,090,762 B2; US 9,284,389 B2; US 9,309,338 B2; WO 2006/045738 A1; and WO 2015/069637 A2. US 2007/010616 relates to impact modification of thermoplastics with ethylene/alpha-olefin interpolymers. US 2010/240818 relates to improved impact modification of thermoplastic polymers and polymer blends. US 6 828 395 relates to polymerization process and control of polymer composition properties. US 2006/036041 relates to high strength bimodal polyethylene compositions. WO 2016/172567 relates to methods for operating a polymerization reactor. CA 2871 463 relates to passivated supports: catalysts, process and product.

SUMMARY

We provide a carbon black-containing bimodal polyethylene composition ("CB bimodal PE composition") made with a bimodal catalyst system, products made therefrom, methods of making and using same, and articles containing same.

The CB bimodal PE composition may be characterized by at least one improved property relative to that of a prior or non-inventive bimodal PE composition.

The CB bimodal PE composition may be used in industrial applications.

In a first aspect, the invention provides a carbon black-containing bimodal polyethylene composition comprising carbon black and a lower molecular weight (LMW) polyethylene component and a higher molecular weight (HMW) polyethylene component, wherein each of the LMW and HMW polyethylene components comprises ethylene-derived monomeric units and ($C_3$-$C_{20}$)alpha-olefin-derived comonomeric units; and wherein the carbon black-containing bimodal polyethylene composition is characterized by each of limitations (a) to (d): (a) a resolved bimodality (resolved molecular weight distribution) showing in a chromatogram of gel permeation chromatography (GPC) of the carbon black-containing bimodal polyethylene composition, wherein the chromatogram shows a peak representing the HMW polyethylene component, a peak representing the LMW polyethylene component, and a local minimum in a range of Log(molecular weight) ("Log(MW)") 3.5 to 5.5 between the Log(MW) peak representing the HMW polyethylene component and the Log(MW) peak representing the LMW polyethylene component, measured according to the Bimodality Test Method; (b) a density from 0.950 to 0.965 gram per cubic centimeter ($g/cm^3$), measured according to ASTM D792-13 Method B; (c) a melt index ($I_2$) of from 0.1 to 1.0 gram per 10 minutes (g/10 min.) measured according to ASTM D1238-13 (190° C., 2.16 kg); and (d) a melt flow ratio ($I_{21}/I_2$) of from 50 to 150, wherein $I_2$ is measured as above and $I_{21}$ is flow index measured according to ASTM D1238-13 (190° C., 21.6 kg); wherein the amount of carbon black is from 1 to 4 weight percent of total weight of the carbon black-containing bimodal polyethylene composition; wherein the carbon black-containing bimodal polyethylene composition is further described by an environmental stress crack resistance (ESCR) F50 measured according to ASTM D1693-15 in 10 weight percent (wt%) Igepal CO-630 in water at 50° C. of greater than 1,000 hours.

In a further aspect, the invention provides a method of making a carbon black-containing bimodal polyethylene composition as described herein, the method comprising contacting ethylene (monomer) and at least one ($C_3$-$C_{20}$)alpha-olefin (comonomer) with a mixture of a bimodal catalyst system and a trim solution in the presence of molecular hydrogen gas ($H_2$) and, optionally, an induced condensing agent (ICA) in one polymerization reactor under (co)polymerizing conditions, thereby making a carbon black-free bimodal polyethylene composition, and separately melt compounding the carbon black-free bimodal polyethylene composition with carbon black, thereby making the carbon black-containing bimodal polyethylene composition; wherein the trim solution consists essentially of a (tetramethylcyclopentadienyl)(n-propylcyclopentadienyl)zirconium complex and an inert liquid solvent and the bimodal catalyst system consists essentially of an activator species, a non-metallocene ligand-Group 4 metal complex and a metallocene ligand-Group 4 metal complex, all disposed on a solid support; and wherein the (co)polymerizing conditions comprise a reaction temperature from 80 degrees (°) to 110° Celsius (C.); a molar ratio of the molecular hydrogen gas to the ethylene (H2/C2 molar ratio) from 0.001 to 0.050; and a molar ratio of the comonomer (Comer) to the ethylene (Comer/C2 molar ratio) from 0.005 to 0.10; and wherein the carbon black-containing bimodal polyethylene composition is further described by an environmental stress crack resistance (ESCR) F50 measured according to ASTM D1693-15 in 10 weight percent (wt%) Igepal CO-630 in water at 50° C. of greater than 1,000 hours.

In a further aspect, the invention provides the manufactured article of claim 9.

In a further aspect, the invention provides the coated conduit of claim 11.

DRAWINGS

Figure (FIG.) 1 contains drawings of structural formulas of (pro)catalysts.

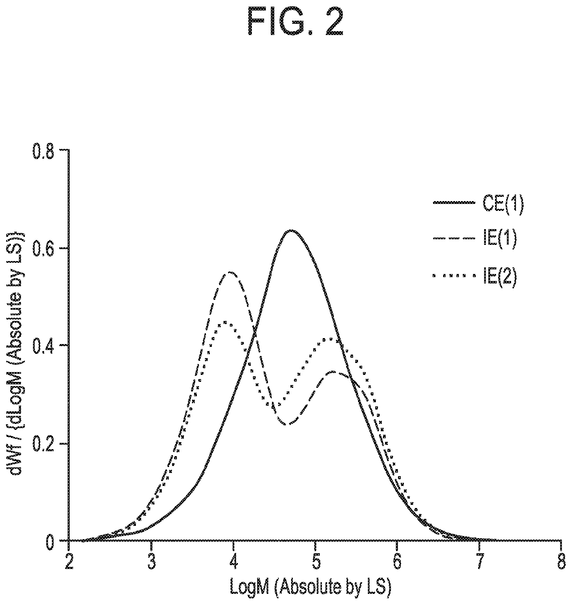

FIG. 2 is a GPC chromatogram of inventive examples 1 and 2 of the CB bimodal PE composition and a comparative composition.

DETAILED DESCRIPTION

Certain inventive embodiments are described below as numbered aspects for easy cross-referencing. Additional embodiments are described elsewhere herein.

Aspect 1. A carbon black-containing bimodal polyethylene composition ("CB bimodal PE composition") comprising carbon black and a lower molecular weight (LMW) polyethylene component and a higher molecular weight (HMW) polyethylene component, wherein each of the LMW and HMW polyethylene components comprises ethylene-derived monomeric units and $(C_3-C_{20})$alpha-olefin-derived comonomeric units; and wherein the carbon black-containing bimodal polyethylene composition is characterized by each of limitations (a) to (d): (a) a resolved bimodality (resolved molecular weight distribution) showing in a chromatogram of gel permeation chromatography (GPC) of the carbon black-containing bimodal polyethylene composition, wherein the chromatogram shows a peak representing the HMW polyethylene component, a peak representing the LMW polyethylene component, and a local minimum in a range of Log(molecular weight) ("Log(MW)") 3.5 to 5.5, alternatively 4.0 to 5.0, alternatively 4.4 to 4.7 between the Log(MW) peak representing the HMW polyethylene component and the Log(MW) peak representing the LMW polyethylene component, measured according to Bimodality Test Method, described later; (b) a density from 0.950 to 0.965 g/cm$^3$, alternatively 0.950 to 0.960 g/cm$^3$, alternatively 0.9500 to 0.959 g/cm$^3$, measured according to ASTM D792-13 Method B; (c) a melt index ($I_2$) of from 0.1 to 1.0 g/10 min., alternatively 0.15 to 0.75 g/10 min., alternatively 0.20 to 0.60 g/10 min. measured according to ASTM D1238-13 (190° C., 2.16 kg); and (d) a melt flow ratio ($I_{21}/I_2$) of from 50 to 150, alternatively from 55 to 140, alternatively from 60 to 130, alternatively from 61 to 125 wherein $I_2$ is measured as above and $I_{21}$ is flow index measured according to ASTM D1238-13 (190° C., 21.6 kg); wherein the amount of carbon black is from 1 to 4 weight percent (wt%), alternatively from 1.6 to 3.4 wt% of total weight of the CB bimodal PE composition; wherein the carbon black-containing bimodal polyethylene composition is further described by an environmental stress crack resistance (ESCR) F50 measured according to ASTM D1693-15 in 10 weight percent (wt%) Igepal CO-630 in water at 50° C. of greater than 1,000 hours.

Aspect 2. The CB bimodal PE composition of aspect 1 characterized by an amount of carbon black of from 2 to 3 weight percent based on total weight of the carbon black-containing bimodal polyethylene composition and/or wherein the carbon black-containing bimodal polyethylene composition is further described by any one of limitations (i) to (vi): (i) Hardness Shore D greater than 55, alternatively greater than 60, alternatively from 60.1 to 70 measured according to ASTM D2240-15 (Type D), described later; (ii) an environmental stress crack resistance (ESCR) F50 measured according to ASTM D1693-15 in 10 weight percent (wt%) Igepal CO-630 in water at 50° C. of greater than 1,000 hours, alternatively greater than 2,000 hours, alternatively greater than 5,000 hours, and in some aspects at most 10,000 hours; (iii) a 2% Flexural Secant Modulus (flexural modulus) from 725 to 1,000 megapascals (MPa), alternatively from 729 to 950 MPa, alternatively from 730 to 900 MPa measured according to ASTM D790-17; (iv) an oxidative induction time (OIT) of greater than 40 minutes, alternatively greater than 50 minutes, alternatively greater than 60 minutes, alternatively from 60.0 to 70 minutes at 210° C. as measured by differential scanning calorimetry (DSC) according to OIT Test Method described later; (v) at least two of (i) to (iv); (vi) each of (i) to (iv). In some aspects the carbon black is from 2.0 to 3.0 wt%, alternatively from 2.1 to 3.1 wt%, alternatively from 2.0 to 2.8 wt%, alternatively from 2.5 to 2.7 wt%, of the CB bimodal PE composition.

Aspect 3. The CB bimodal PE composition of aspect 1 further described by any one of limitations (i) to (vii): (i) a molecular mass dispersity ($M_w/M_n$), Ð$_M$ (pronounced D-stroke M), from 5 to 30, alternatively from 7 to 25, alternatively from 9 to 22, measured according to Gel Permeation Chromatography (GPC) Test Method, described later; (ii) a weight average molecular weight ($M_n$) of the LMW polyethylene component from 4,000 to 5,000 grams per mole (g/mol) and a $M_n$ of the HMW polyethylene component from 70,000 to 90,000 g/mol, measured according to GPC Test Method, described later, after deconvoluting the LMW and HMW polyethylene components of the CB bimodal PE composition according to Deconvoluting Test Method, described later; (iii) no measurable, alternatively no detectable, amount of long chain branching per 1,000 carbon atoms ("LCB Index"), measured according to LCB Test Method (described later); (iv) both (i) and (ii); (v) both (i) and (iii); (vi) both (ii) and (iii); and (vii) each of (i) to (iii).

Aspect 4. The CB bimodal PE composition of any one of aspects 1 to 3 further described by any one of limitations (i) to (iv): (i) the $(C_3-C_{20})$alpha-olefin-derived comonomeric units are derived from 1-butene; (ii) the $(C_3-C_{20})$alpha-olefin-derived comonomeric units are derived from 1-hexene; (iii) the $(C_3-C_{20})$alpha-olefin-derived comonomeric units are derived from 1-octene; and (iv) the $(C_3-C_{20})$alpha-olefin-derived comonomeric units are derived from a combination of any two, alternatively each of 1-butene, 1-hexene, and 1-octene.

Aspect 5. The CB bimodal PE composition of any one of aspects 1 to 4 further comprising an antioxidant, a processing aid, or a combination of any two or more thereof.

Aspect 6. A carbon black-containing bimodal polyethylene composition made by copolymerizing ethylene (monomer) and at least one $(C_3-C_{20})$alpha-olefin (comonomer) with a mixture of a bimodal catalyst system and a trim solution in the presence of molecular hydrogen gas $(H_2)$ and, optionally, an induced condensing agent (ICA) in one, two or more polymerization reactors (e.g., one fluidized bed gas phase reactor) under (co)polymerizing conditions, thereby making a carbon black-free bimodal polyethylene composition; and melt-compounding the carbon black-free bimodal polyethylene composition with carbon black, thereby making the carbon black-containing bimodal polyethylene composition; wherein prior to being mixed together the trim solution consists essentially of a (tetramethylcyclopentadienyl)(n-propylcyclopentadienyl)zirconium complex (procatalyst, e.g., (tetramethylcyclopentadienyl)(n-propylcyclopentadienyl) zirconium dimethyl) and an inert liquid solvent (e.g., liquid alkane) and the bimodal catalyst system consists essentially of an activator species (derivative, e.g., a methylaluminoxane species), a bis(2-pentamethylphenylamido)ethyl)amine zirconium complex and a (tetramethylcyclopentadienyl)(n-propylcyclopentadienyl)zirconium complex, all disposed on a solid support (e.g., a hydrophobic fumed silica); and wherein the (co)polymerizing conditions comprise a reaction temperature from 80 degrees (°) to 110° Celsius (C.), alternatively 83° to 106° C., alternatively 83° to 87° C., alternatively 91° to 100° C., alternatively 101° to 106° C.; a molar ratio of the molecular hydrogen gas to the ethylene (H2/C2 molar ratio) from 0.001 to 0.020, alternatively 0.002 to 0.015, alternatively 0.005 to 0.010; and a molar ratio of the comonomer (Comer) to the ethylene (Comer/C2 molar ratio) from 0.005 to 0.050, alternatively 0.008 to 0.030, alternatively 0.015 to 0.025. The CB bimodal PE composition may be that of any one of aspects 1 to 5.

Aspect 7. A method of making a carbon black-containing bimodal polyethylene composition, the method comprising contacting ethylene (monomer) and at least one $(C_3-C_{20})$alpha-olefin (comonomer) with a mixture of a bimodal catalyst system and a trim solution in the presence of molecular hydrogen gas $(H_2)$ and, optionally, an induced condensing agent (ICA) in one, two or more polymerization reactors under (co)polymerizing conditions, thereby making a carbon black-free bimodal polyethylene composition; and separately melt-compounding the carbon black-free bimodal polyethylene composition with carbon black, thereby making the carbon black-containing bimodal polyethylene composition; wherein prior to being mixed together the trim solution consists essentially of a (tetramethylcyclopentadienyl)(n-propylcyclopentadienyl)zirconium complex (procatalyst, e.g., (tetramethylcyclopentadienyl)(n-propylcyclopentadienyl) zirconium dimethyl) and an inert liquid solvent (e.g., liquid alkane) and the bimodal catalyst system consists essentially of an activator species (derivative, e.g., a methylaluminoxane species), a non-metallocene ligand-Group 4 metal complex (e.g., bis(2-pentamethylphenylamido)ethyl)amine zirconium complex) and a metallocene ligand-Group 4 metal complex (e.g., (tetramethylcyclopentadienyl)(n-propylcyclopentadienyl)zirconium complex), all disposed on a solid support (e.g., a hydrophobic fumed silica); and wherein the (co)polymerizing conditions comprise a reaction temperature from 80° to 110° C., alternatively 83° to 106° C., alternatively 83° to 87° C., alternatively 91° to 100° C., alternatively 101° to 106° C.; a molar ratio of the molecular hydrogen gas to the ethylene (H2/C2 molar ratio) from 0.001 to 0.050, alternatively 0.001 to 0.030, alternatively 0.002 to 0.025, alternatively 0.010 to 0.020; and a molar ratio of the comonomer (Comer) to the ethylene (Comer/C2 molar ratio) from 0.005 to 0.10, alternatively 0.008 to 0.050, alternatively 0.010 to 0.040 alternatively 0.008 to 0.030, alternatively 0.015 to 0.025; and wherein the carbon black-containing bimodal polyethylene composition is further described by an environmental stress crack resistance (ESCR) F50 measured according to ASTM D1693-15 in 10 weight percent (wt%) Igepal CO-630 in water at 50° C. of greater than 1,000 hours. The CB bimodal PE composition is that of any one of aspects 1 to 5. In an alternative embodiment of aspect 6 or 7, the CB-free bimodal catalyst system may be prepared, and then fed into the polymerization reactor(s) as a suspension (e.g., slurry) in a mineral oil and the trim solution may be prepared, and then fed into the polymerization reactor(s) as a solution, e.g., in a liquid alkane.

Aspect 8. The carbon black-containing bimodal polyethylene composition of aspect 6 or the method of aspect 7 may be further described by any one of limitations (i) to (vi) for making the carbon black-free bimodal polyethylene composition: (i) wherein the bimodal catalyst system consists essentially of a bis(2-pentamethylphenylamido)ethyl)amine zirconium complex and a (tetramethylcyclopentadienyl)(n-propylcyclopentadienyl)zirconium complex in a molar ratio thereof from 1.0:1.0 to 5.0:1.0, respectively, alternatively 1.5:1.0 to 2.5:1.0, alternatively 2.0:1.0 to 4.0:1.0, 2.5:1.0 to 3.49:1.0, alternatively from 2.7:1.0 to 3.3:1.0, alternatively from 2.9:1.0 to 3.1:1.0, alternatively 1.5:1.0, alternatively 2.0:1.0, and a methylaluminoxane species, all disposed by spray-drying onto the solid support; (ii) wherein the bimodal catalyst system further consists essentially of mineral oil and the solid support is a hydrophobic fumed silica (e.g., a fumed silica treated with dimethyldichlorosilane); (iii) wherein the mixture is a suspension of the bimodal catalyst system in mineral oil and the trim solution and wherein the mixture is premade and then fed into the polymerization reactor(s); (iv) wherein the trim solution is made by dissolving (tetramethylcyclopentadienyl)(n-propylcyclopentadienyl)zirconium dimethyl in the inert liquid solvent (e.g., liquid alkane) to give the trim solution; (v) wherein the polymerization reactor(s) is one fluidized bed gas phase reactor and the method is a gas phase polymerization; and (vi) each of (i) to (v). The molar ratio of the bis(2-pentamethylphenylamido)ethyl)amine zirconium complex to the (tetramethylcyclopentadienyl)(n-propylcyclopentadienyl)zirconium complex may be based on molar ratio of their respective Zr atom contents, which may be calculated from ingredient weights (e.g., weights of bis(2-pentamethylphenylamido)ethyl)amine zirconium dibenzyl and (tetramethylcyclopentadienyl)(n-propylcyclopentadienyl)zirconium dichloride) or may be analytically measured.

Aspect 9. A manufactured article comprising a shaped form of the carbon black-containing bimodal polyethylene composition of any one of aspects 1 to 6.

Aspect 10. The manufactured article of aspect 9 selected from: coatings, films, sheets, extruded articles, and injection molded articles. The manufactured article may be a coating layer (e.g., of a coated article), pipe, film (e.g., blown film), agricultural film, food packaging, garment bags, grocery bags, heavy-duty sacks, industrial sheeting, pallet and shrink wraps, bags, buckets, freezer containers, lids, and toys.

Aspect 11. A coated conduit comprising a pipe and a coating disposed on at least a portion the pipe, wherein the coating comprises the carbon black-containing bimodal polyethylene composition of aspect 1. The pipe may comprise a cylindrical wall having a length and proximal and distal ends spaced apart from each other by the length of the pipe. The cylindrical wall of the pipe may define an interior surface and an exterior surface, which is spaced apart from the interior surface by the thickness of the cylindrical wall of the pipe. The interior surface of the cylindrical wall of the pipe may define a volumetric space within the pipe. The coated conduit and its pipe may be flexible or rigid; alternatively rigid. The coating at least partially covers, alternatively covers most of, alternatively completely covers a surface of the pipe. The coating may be in direct physical contact with the surface of the pipe, alternatively the coating may be in indirect contact via one or more intervening layers disposed between the surface of the pipe and the coating. The surface of the pipe that is at least partially covered by the coating may be the interior surface, alternatively the exterior surface, alternatively both. The pipe may be composed of steel, and the coated conduit may be a coated steel pipe. The steel may be composed of an alloy of iron containing about 1% carbon, and optionally 0, 1, or more additional elements as minor constituents. The volumetric space within the pipe of the coated conduit may be used for conveying a substance in need of conveyance (e.g., transportation).

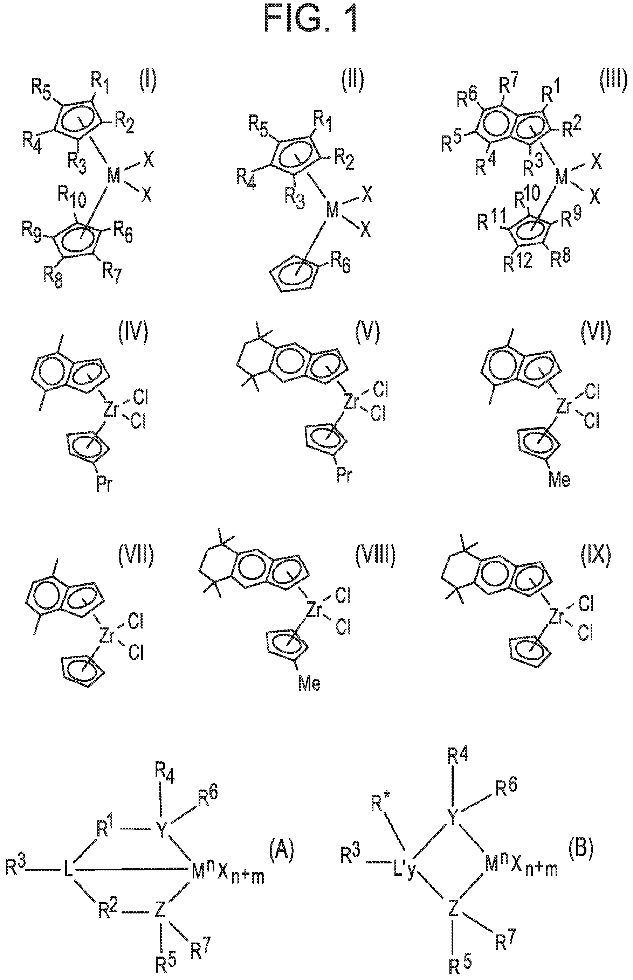

Activator (for activating procatalysts to form catalysts). Also known as co-catalyst. Any metal containing compound, material or combination of compounds and/or substances, whether unsupported or supported on a support material, that can activate a procatalyst to give a catalyst and an activator species. The activating may comprise, for example, abstracting at least one leaving group (e.g., at least one X in any one of the structural formulas in FIG. 1) from a metal of a procatalyst (e.g., M in any one of the structural formulas in FIG. 1) to give the catalyst. The catalyst may be generically named by replacing the leaving group portion of the name of the procatalyst with "complex". For example, a catalyst made by activating bis(2-pentamethylphenylamido)ethyl)amine zirconium dibenzyl may be called a "bis(2-pentamethylphenylamido)ethyl)amine zirconium complex". A catalyst made by activating (tetramethylcyclopentadienyl)(n-propylcyclopentadienyl)zirconium dichloride or (tetramethylcyclopentadienyl)(n-propylcyclopentadienyl)zirconium dimethyl may be called a "(tetramethylcyclopentadienyl)(n-propylcyclopentadienyl)zirconium complex". The catalyst made by activating (tetramethylcyclopentadienyl)(n-propylcyclopentadienyl)zirconium dichloride may be the same as or different than the catalyst made by activating (tetramethylcyclopentadienyl)(n-propylcyclopentadienyl)zirconium dimethyl. The metal of the activator typically is different than the metal of the procatalyst. The molar ratio of metal content of the activator to metal content of the procatalyst(s) may be from 1000:1 to 0.5:1, alternatively 300:1 to 1:1, alternatively 150:1 to 1:1. The activator may be a Lewis acid, a non-coordinating ionic activator, or an ionizing activator, or a Lewis base, an alkylaluminum, or an alkylaluminoxane. The alkylaluminum may be a trialkylaluminum, alkylaluminum halide, or alkylaluminum alkoxide (diethylaluminum ethoxide). The trialkylaluminum may be trimethylaluminum, triethylaluminum ("TEAl"), tripropylaluminum, triisobutylaluminum, and the like. The alkylaluminum halide may be diethylaluminum chloride. The alkylaluminoxane may be a methyl aluminoxane (MAO), ethyl aluminoxane, or isobutylaluminoxane. The activator may be a MAO that is a modified methylaluminoxane (MMAO). The corresponding activator species may be a derivative of the Lewis acid, non-coordinating ionic activator, ionizing activator, Lewis base, alkylaluminum, or alkylaluminoxane, respectively. The activator species may have a different structure or composition than the activator from which it is derived and may be a by-product of the activation of the procatalyst or a derivative of the byproduct. An example of the derivative of the byproduct is a methylaluminoxane species that is formed by devolatilizing during spray-drying of a bimodal catalyst system made with methylaluminoxane. The activator may be commercially available. An activator may be fed into the polymerization reactor(s) (e.g., one fluidized bed gas phase reactor) in a separate feed from that feeding the reactants used to make the bimodal catalyst system (e.g., supported bimodal catalyst system) and/or the trim solution thereinto. The activator may be fed into the polymerization reactor(s) in "wet mode" in the form of a solution thereof in an inert liquid such as mineral oil or toluene, in slurry mode as a suspension, or in dry mode as a powder.

Bimodal. Multimodal; having at least 2 peaks, (e.g., 2 or 3 peaks), alternatively only 2 peaks, in a molecular weight distribution (MWD) such as MWD measured by gel permeation chromatography (GPC).

Bimodal catalyst system. A combination of two or more catalyst compounds independently useful for enhancing rate of polymerization of a same olefin monomer and/or comonomer and yields a carbon black-free bimodal polyethylene composition. The bimodal catalyst system has only two catalysts, and in some aspects, the bimodal catalyst system is prepared from two and only two procatalyst compounds. One of the catalyst compounds is a metallocene catalyst compound and the other a non-metallocene catalyst compound. One of the catalyst compounds yields, under the (co)polymerizing conditions, the lower molecular weight (LMW) polyethylene component and the other catalyst compound yields the higher molecular weight (HMW) polyethylene component. The LMW and HMW polyethylene components together constitute the bimodal polyethylene composition, which may be the PE composition, made with the bimodal catalyst system, and having a multimodal (e.g., bimodal) molecular weight distribution. Typically the bimodal catalyst system, method employing same, and CB bimodal PE composition is free of a Ziegler-Natta catalyst.

The bimodal catalyst system may be made by contacting at least two procatalysts having different structures from each other with at least one of the activators. Each procatalyst may independently comprise a metal atom, at least one ligand bonded to the metal atom, and at least one leaving group bonded to and displaceable from the metal atom. Each metal may be an element of any one of Groups 3 to 14, e.g., a Group 4 metal. Each leaving group is H, an unsubstituted alkyl, an aryl group, an aralkyl group, a halide atom, an alkoxy group, or a primary or secondary amino group. In metallocenes, at least one ligand is a cyclopentadienyl or substituted cyclopentadienyl group. In non-metallocenes, no ligand is a cyclopentadienyl or substituted cyclopentadienyl group, and instead at least one ligand has at least one O, N, and/or P atom that coordinates to the metal atom. Typically the ligand(s) of the non-metallocene has at least two O, N, and/or P atoms that coordinates in a multidentate (e.g., bidentate or tridentate) binding mode to the metal atom. Discrete structures means the procatalysts and catalysts made therefrom have different ligands from each other, and either the same or a different metal atom, and either the same or different leaving groups.

One of the procatalysts, useful for making a catalyst of the bimodal catalyst system and/or making the trim solution, may be a metallocene compound of any one of formulas (I) to (IX) and another of the procatalysts may be a non-metallocene of any one of formulas (A) and (B), wherein the formulas are drawn in FIG. 1.

In formula (I), FIG. 1, each of the $R^1$ to $R^{10}$ groups is independently H, a $(C_1-C_{20})$alkyl, $(C_6-C_{20})$aryl, or $(C_7-C_{20})$aralkyl group; M is a Group 4 metal; and each X is independently H, a halide, $(C_1-C_{20})$alkyl, or $(C_7-C_{20})$aralkyl group. In some aspects each of $R^7$ to $R^{10}$ is H in formula (I).

In formula (II), FIG. 1, each of the $R^1$ to $R^6$ groups is independently H, a $(C_1-C_{20})$alkyl, $(C_6-C_{20})$aryl, or $(C_7-C_{20})$aralkyl group; M is a Group 4 metal (e.g., Ti, Zr, or Hf); and each X is independently H, a halide, $(C_1-C_{20})$alkyl, or $(C_7-C_{20})$aralkyl group.

In formula (III), FIG. 1, each of the $R^1$ to $R^{12}$ groups is independently H, a $(C_1-C_{20})$alkyl, $(C_6-C_{20})$aryl, or $(C_7-C_{20})$aralkyl group, wherein at least one of $R^4$ to $R^7$ is not H; M is a Group 4 metal (e.g., Ti, Zr, or Hf); and each X is independently H, a halide, $(C_1-C_{20})$alkyl, or $(C_7-C_{20})$aralkyl group. In some aspects each of $R^9$ to $R^{12}$ is H in formula (III).

In some aspects each X in formulas (I) to (III) is independently a halide, $(C_1-C_4)$alkyl, or benzyl; alternatively Cl or benzyl. In some aspects each halide in formulas (I) to (III) is independently Cl, Br, or I; alternatively Cl or Br; alternatively Cl. In some aspects each M in formulas (I) to (III) is independently Ti, Zr, or Hf; alternatively Zr or Hf; alternatively Ti; alternatively Zr; alternatively Hf.

In formulas (IV) to (IX), FIG. 1, Me is methyl ($CH_3$), Pr is propyl (i.e., $CH_2CH_2CH_3$), and each "I" substituent on a ring represents a methyl group.

In formulas (A) and (B), FIG. 1, M is a Group 3 to 12 transition metal atom or a Group 13 or 14 main group metal atom, or a Group 4, 5, or 6 metal atom. M may be a Group 4 metal atom, alternatively Ti, Zr, or Hf; alternatively Zr or Hf; alternatively Zr. Each X is independently a leaving group as described above, such as an anionic leaving group. Subscript y is 0 or 1; when y is 0 group L' is absent. Subscript n represents the formal oxidation state of metal atom M and is +3, +4, or +5; alternatively n is +4. L is a Group 15 or 16 element, such as nitrogen or oxygen; L' is a Group 15 or 16 element or Group 14 containing group, such as carbon, silicon or germanium. Y is a Group 15 element, such as nitrogen or phosphorus; alternatively nitrogen. Z is a Group 15 element, such as nitrogen or phosphorus; alternatively nitrogen. Subscript m is 0, -1, -2 or -3; alternatively -2; and represents the total formal charge of the Y, Z, and L in formula (A) and the total formal charge of the Y, Z, and L' in formula (B). $R^1$, $R^2$, $R^3$, $R^4$, $R^5$, $R^6$, and $R^7$ are independently H, a $(C_1-C_{20})$hydrocarbyl group, a $(C_1-C_{20})$heterohydrocarbyl group, or a $(C_1-C_{20})$organoheteryl group, wherein the $(C_1-C_{20})$heterohydrocarbyl group and $(C_1-C_{20})$organoheteryl group each independently have at least one heteroatom selected from Si, Ge, Sn, Pb, or P. Alternatively, $R^1$ and $R^2$ are covalently bonded to each other to form a divalent group of formula -$R^{1a}$-$R^{2a}$- and/or $R^4$ and $R^5$ are covalently bonded to each other to form a divalent group of formula -$R^{4a}$-$R^{5a}$-, wherein -$R^{1a}$-$R^{2a}$- and -$R^{4a}$-$R^{5a}$- are independently a $(C_1-C_{20})$hydrocarbylene group, a $(C_1-C_{20})$heterohydrocarbylene group, or a $(C_1-C_{20})$organoheterylene group. $R^3$ may be absent; alternatively $R^3$ is H, a halogen atom, a $(C_1-C_{20})$hydrocarbyl group, a $(C_1-C_{20})$heterohydrocarbyl group, or a $(C_1-C_{20})$organoheteryl group. $R^3$ is absent if, for example, L is O, H, or an alkyl group. $R^4$ and $R^5$ may be a $(C_1-C_{20})$alkyl group, a $(C_6-C_{20})$aryl group, a substituted $(C_6-C_{20})$aryl group, a $(C_3-C_{20})$cycloalkyl group, a substituted $(C_3-C_{20})$cycloalkyl group, a $(C_8-C_{20})$bicyclic aralkyl group, or a substituted $(C_8-C_{20})$bicyclic aralkyl group. $R^6$ and $R^7$ may be H or absent. R* may be absent, or may be a hydrogen, a Group 14 atom containing group, a halogen, or a heteroatom containing group.

The bimodal catalyst system comprises a combination of a metallocene catalyst compound and a non-metallocene catalyst compound. The metallocene catalyst compound is a metallocene ligand-Group 4 metal complex, which may be made by activating (with the activator) a procatalyst compound selected from (pentamethylcyclopentadienyl)(n-propylcyclopentadienyl)zirconium dichloride, bis(n-butylcyclopentadienyl)zirconium dichloride, (pentamethylcyclopentadienyl)(n-propylcyclopentadienyl)zirconium dimethyl, and bis(n-butylcyclopentadienyl)zirconium dimethyl.

The non-metallocene catalyst compound is a non-metallocene ligand-Group 4 metal complex, which may be made by activating (with the activator) a procatalyst compound selected from bis(2-(2,4,6-trimethylphenylamido)ethyl)amine zirconium dibenzyl and bis(2-(pentamethylphenylamido)ethyl)amine zirconium dibenzyl.

In some aspects the bimodal catalyst system may be made by activating, according to the method of contacting with an activator, a combination of a metallocene procatalyst compound that is (tetramethylcyclopentadienyl)(n-propylcyclopentadienyl)zirconium dichloride and a non-metallocene procatalyst compound that is bis(2-pentamethylphenylamido)ethyl)amine zirconium dibenzyl. The (tetramethylcyclopentadienyl)(n-propylcyclopentadienyl)zirconium dichloride is a compound of formula (II) wherein M is Zr, each X is Cl, $R^6$ is propyl ($CH_2CH_2CH_3$), and each of $R^1$ to $R^4$ is methyl. The bis(2-pentamethylphenylamido)ethyl)amine zirconium dibenzyl is a procatalyst compound of formula (A) wherein M is Zr, each X is benzyl, $R^1$ and $R^2$ are each $CH_2CH_2$; $R^3$ is H; L, Y, and Z are all N; and $R^4$ and $R^5$ are each pentamethylphenyl; and $R^6$ and $R^7$ are absent.

Each of the catalyst compounds of the bimodal catalyst system are supported on a support material, in which case the bimodal catalyst system is a supported catalyst system. When each catalyst compound is supported, the catalyst compounds may reside on the same support material (e.g., same particles), or on different support materials (e.g., different particles). The bimodal catalyst system includes mixtures of unsupported catalyst compounds in slurry form and/or solution form. The support material may be a silica (e.g., fumed silica), alumina, a clay, or talc. The fumed silica may be hydrophilic (untreated), alternatively hydrophobic (treated). In some aspects the support is the hydrophobic fumed silica, which may be prepared by treating an untreated fumed silica with a treating agent such as dimethyldichlorosilane, a polydimethylsiloxane fluid, or hexamethyldisilazane. In some aspects the treating agent is dimethyldichlorosilane.

In some aspects the bimodal catalyst system is the bimodal catalyst system described in any one of the following references: US 7,193,017 B2; US 7,312,279 B2; US 7,858,702 B2; US 7,868,092 B2; US 8,202,940 B2; and US 8,378,029 B2 (e.g., column 4/line 60 to column 5/line 10 and column 10/lines 6 to 38 and Example 1).

The bimodal catalyst system may be fed into the polymerization reactor(s) in "dry mode" or "wet mode", alternatively dry mode, alternatively wet mode. The dry mode is fed in the form of a dry powder or granules. The wet mode is fed in the form of a suspension of the bimodal catalyst system in an inert liquid such as mineral oil. The bimodal catalyst system is commercially available under the PRODIGY™ Bimodal Catalysts brand, e.g., BMC-200, from Univation Technologies, LLC.

($C_3$-$C_{20}$)alpha-olefin. A compound of formula (I): $H_2C=C(H)$-R (I), wherein R is a straight chain ($C_1$-$C_{18}$)alkyl group. ($C_1$-$C_{18}$)alkyl group is a monovalent unsubstituted saturated hydrocarbon having from 1 to 18 carbon atoms. Examples of R are methyl, ethyl, propyl, butyl, pentyl, hexyl, heptyl, octyl, nonyl, decyl, undecyl, dodecyl, tridecyl, tetradecyl, pentadecyl, hexadecyl, heptadecyl, and octadecyl. In some embodiments the ($C_3$-$C_{20}$)alpha-olefin is 1-propene, 1-butene, 1-hexene, or 1-octene; alternatively 1-butene, 1-hexene, or 1-octene; alternatively 1-butene or 1-hexene; alternatively 1-butene or 1-octene; alternatively 1-hexene or 1-octene; alternatively 1-butene; alternatively 1-hexene; alternatively 1-octene; alternatively a combination of any two of 1-butene, 1-hexene, and 1-octene. The ($C_3$-$C_{20}$)alpha-olefin is used as a comonomer from which the comonomeric units of the LMW polyethylene component are derived may be the same as, alternatively different than, the($C_3$-$C_{20}$)alpha-olefin from which the comonomeric units of the HMW polyethylene component are derived.

Consisting essentially of, consist(s) essentially of, and the like. Partially-closed ended expressions that exclude anything that would affect the basic and novel characteristics of that which they describe, but otherwise allow anything else. As applied to the description of a bimodal catalyst system embodiment consisting essentially of bis(2-pentamethylphenylamido)ethyl)amine zirconium dibenzyl and (tetramethylcyclopentadienyl)(n-propylcyclopentadienyl)zirconium dichloride, both disposed on a solid support and activated with an activating agent, the expression means the embodiment does not contain a Ziegler-Natta catalyst or any organic ligand other than the bis(2-pentamethylphenylamido)ethyl)amine, benzyl, tetramethylcyclopentadienyl, and n-propylcyclopentadienyl ligands. One or more of the benzyl and chloride leaving groups may be absent from the Zr in the bimodal catalyst system. The expression "consisting essentially of" as applied to the description of the "trim solution means the trim solution is unsupported (i.e., not disposed on a particulate solid) and is free of a Ziegler-Natta catalyst or any organic ligand other than the tetramethylcyclopentadienyl and n-propylcyclopentadienyl ligands. The expression "consist essentially of" as applied to a dry inert purge gas means that the dry inert purge gas is free of, alternatively has less than 5 parts per million based on total parts by weight of gas of water or any reactive compound that could oxidize a constituent of the present polymerization reaction. In some aspects any one, alternatively each "comprising" or "comprises" may be replaced by "consisting essentially of" or "consists essentially of", respectively; alternatively by "consisting of" or "consists of", respectively.

Consisting of and consists of. Closed ended expressions that exclude anything that is not specifically described by the limitation that it modifies. In some aspects any one, alternatively each expression "consisting essentially of" or "consists essentially of" may be replaced by the expression "consisting of" or "consists of", respectively.

(Co)polymerizing conditions. Any result effective variable or combination of such variables, such as catalyst composition; amount of reactant; molar ratio of two reactants; absence of interfering materials (e.g., $H_2O$ and $O_2$); or a process parameter (e.g., feed rate or temperature), step, or sequence that is effective and useful for the copolymerizing method in the polymerization reactor(s) to give the CB-free bimodal PE composition.

At least one, alternatively each of the (co)polymerizing conditions may be fixed (i.e., unchanged) during production of the CB-free bimodal PE composition. Such fixed (co)polymerizing conditions may be referred to herein as steady-state (co)polymerizing conditions. Steady-state (co)polymerizing conditions are useful for continuously making embodiments of the CB-free bimodal PE composition having same polymer properties.

Alternatively, at least one, alternatively two or more of the (co)polymerizing conditions may be varied within their defined operating parameters during production of the CB-free bimodal PE composition in order to transition from the production of a first embodiment of the CB-free bimodal PE composition having a first set of polymer properties to a non-inventive CB-free bimodal PE composition or to a second embodiment of the CB-free bimodal PE composition having a second set of polymer properties, wherein the first and second sets of polymer properties are different and are each within the limitations described herein for the CB-free bimodal PE composition. For example, all other (co)polymerizing conditions being equal, a higher molar ratio of $(C_3-C_{20})$alpha-olefin comonomer/ethylene feeds in the method of copolymerizing produces a lower density of the resulting product, CB-free bimodal PE composition. At a given molar ratio of comonomer/ethylene, the molar ratio of the procatalyst of the trim solution relative to total moles of catalyst compounds of the bimodal catalyst system may be varied to adjust the density, melt index, melt flow, molecular weight, and/or melt flow ratio thereof. To illustrate an approach to making transitions, perform one of the later described copolymerization examples to reach steady-state (co)polymerizing conditions. Then change one of the (co)polymerizing conditions to begin producing a new embodiment of the CB-free bimodal PE composition. Sample the new embodiment, and measure a property thereof. If necessary, repeat the change condition/sample product/measure property steps at intervals until the measurement shows the desired value for the property is obtained. An example of such varying of an operating parameter includes varying the operating temperature within the aforementioned range from 83° to 87° C. such as by changing from a first operating temperature of 85° C. to a second operating temperature of 86° C., or by changing from a third operating temperature of 87° C. to a third operating temperature of 85° C. Similarly, another example of varying an operating parameter includes varying the molar ratio of molecular hydrogen to ethylene (H2/C2) from 0.017 to 0.018, or from 0.020 to 0.019. Similarly, another example of varying an operating parameter includes varying the molar ratio of comonomer (Comer) to the ethylene (Comer/C2 molar ratio) from 0.028 to 0.038, or from 0.041 to 0.025. Combinations of two or more of the foregoing example variations are included herein. Transitioning from one set to another set of the (co)polymerizing conditions is permitted within the meaning of "(co)polymerizing conditions" as the operating parameters of both sets of (co)polymerizing conditions are within the ranges defined therefore herein. A beneficial consequence of the foregoing transitioning is that any described property value for the CB-free bimodal PE composition, or the LMW or HMW polyethylene component thereof, may be achieved by a person of ordinary skill in the art in view of the teachings herein.

The (co)polymerizing conditions may further include a high pressure, liquid phase or gas phase polymerization reactor and polymerization method to yield the CB-free bimodal PE composition. Such reactors and methods are generally well-known in the art. For example, the liquid phase polymerization reactor/method may be solution phase or slurry phase such as described in US 3,324,095. The gas phase polymerization reactor/method may employ the induced condensing agent and be conducted in condensing mode polymerization such as described in US 4,453,399; US 4,588,790; US 4,994,534; US 5,352,749; US 5,462,999; and US 6,489,408. The gas phase polymerization reactor/method may be a fluidized bed reactor/method as described in US 3,709,853; US 4,003,712; US 4,011,382; US 4,302,566; US 4,543,399; US 4,882,400; US 5,352,749; US 5,541,270; EP-A-0 802 202; and Belgian Patent No. 839,380. These patents disclose gas phase polymerization processes wherein the polymerization medium is either mechanically agitated or fluidized by the continuous flow of the gaseous monomer and diluent. Other gas phase processes contemplated include series or multistage polymerization processes such as described in US 5,627,242; US 5,665,818; US 5,677,375; EP-A-0 794 200; EP-B1-0 649 992; EP-A-0 802 202; and EP-B-634421.

The (co)polymerizing conditions for gas or liquid phase reactors/methods may further include zero, one, two, or more than two additives other than carbon black such as a chain transfer agent, a promoter, or a scavenging agent. The chain transfer agents are well known and may be alkyl metal such as diethyl zinc. Promoters are well known such as in US 4,988,783 and may include chloroform, CFCI3, trichloroethane, and difluorotetrachloroethane. Scavenging agents may be a trialkylaluminum. Slurry or gas phase polymerizations may be operated free of (not deliberately added) scavenging agents. The (co)polymerizing conditions for gas phase reactors/polymerizations may further include an amount (e.g., 0.5 to 200 ppm based on all feeds into reactor) static control agents and/or continuity additives such as aluminum stearate or polyethyleneimine. Static control agents may be added to the gas phase reactor to inhibit formation or buildup of static charge therein.

The (co)polymerizing conditions may further include using molecular hydrogen to control final properties of the LMW and/or HMW polyethylene components or CB-free bimodal PE composition. Such use of $H_2$ is generally described in Polypropylene Handbook 76-78 (Hanser Publishers, 1996). All other things being equal, using hydrogen can increase the melt flow rate (MFR) or melt index (MI) thereof, wherein MFR or MI are influenced by the concentration of hydrogen. A molar ratio of hydrogen to total monomer ($H_2$/monomer), hydrogen to ethylene ($H_2/C_2$), or hydrogen to comonomer ($H_2/\alpha$-olefin) may be from 0.0001 to 10, alternatively 0.0005 to 5, alternatively 0.001 to 3, alternatively 0.001 to 0.10.

The (co)polymerizing conditions may include a partial pressure of ethylene in the polymerization reactor(s) independently from 690 to 3450 kilopascals (kPa, 100 to 500 pounds per square inch absolute (psia), alternatively 1030 to 2070 kPa (150 to 300 psia), alternatively 1380 to 1720 kPa (200 to 250 psia), alternatively 1450 to 1590 kPa (210 to 230 psia), e.g., 1520 kPa (220 psia). 1.000 psia = 6.8948 kPa.

Dry. Generally, a moisture content from 0 to less than 5 parts per million based on total parts by weight. Materials fed to the polymerization reactor(s) during a polymerization reaction under (co)polymerizing conditions typically are dry.

Ethylene. A compound of formula $H_2C=CH_2$. A polymerizable monomer.

Feeds. Quantities of reactants and/or reagents that are added or "fed" into a reactor. In continuous polymerization operation, each feed independently may be continuous or intermittent. The quantities or "feeds" may be measured, e.g., by metering, to control amounts and relative amounts of the various reactants and reagents in the reactor at any given time.

Film: for claiming purposes, measure properties on 25 micrometers thick monolayer films.

Higher molecular weight (HMW). Relative to LMW, having a higher weight average molecular weight ($M_w$). The HMW polyethylene component of the CB-free bimodal PE composition may have an $M_w$ from 10,000 to 1,000,000 g/mol. The lower endpoint of the $M_w$ for the HMW polyethylene component may be 100,000, alternatively 200,000 g/mol, alternatively 300,000 g/mol. The upper endpoint of $M_w$ may be 900,000, alternatively 600,000, alternatively 400,000 g/mol. In describing the CB-free bimodal PE composition, the bottom portion of the range of $M_w$ for the HMW polyethylene component may overlap the upper portion of the range of $M_w$ for the LMW polyethylene component, with the proviso that in any embodiment of the CB-free bimodal PE composition the particular $M_w$ for the HMW polyethylene component is greater than the particular $M_w$ for the LMW polyethylene component. The HMW polyethylene component may be made with catalyst prepared by activating a non-metallocene ligand-Group 4 metal complex.

Inert. Generally, not (appreciably) reactive or not (appreciably) interfering therewith in the polymerization reaction. The term "inert" as applied to the purge gas or ethylene feed means a molecular oxygen ($O_2$) content from 0 to less than 5 parts per million based on total parts by weight of the purge gas or ethylene feed.

Induced condensing agent (ICA). An inert liquid useful for cooling materials in the polymerization reactor(s) (e.g., a fluidized bed reactor). In some aspects the ICA is a $(C_5\text{-}C_{20})$alkane, alternatively a $(C_{11}\text{-}C_{20})$alkane, alternatively a $(C_5\text{-}C_{10})$alkane. In some aspects the ICA is a $(C_5\text{-}C_{10})$alkane. In some aspects the $(C_5\text{-}C_{10})$alkane is a pentane, e.g., normal-pentane or isopentane; a hexane; a heptane; an octane; a nonane; a decane; or a combination of any two or more thereof. In some aspects the ICA is isopentane (i.e., 2-methylbutane). The method of polymerization, which uses the ICA, may be referred to herein as being an inert condensing mode operation (ICMO). Concentration in gas phase measured using gas chromatography by calibrating peak area percent to mole percent (mol%) with a gas mixture standard of known concentrations of ad rem gas phase components. Concentration may be from 1 to 10 mol%, alternatively from 3 to 8 mole%. The use of ICA is optional. In some aspects, including some of the inventive examples described later, an ICA is used. For example, in aspects of the method of making a mixture of ICA and catalyst may be fed into a polymerization reactor. In other aspects of the method, use of ICA may be omitted, and a mixed pre-formulated dry catalyst may be fed as such into the polymerization reactor, which lacks ICA.

Lower molecular weight (LMW). Relative to HMW, having a lower weight average molecular weight ($M_w$). The LMW polyethylene component of the CB-free bimodal PE composition may have an $M_w$ from 3,000 to 100,000 g/mol. The lower endpoint of the $M_w$ for the LMW polyethylene component may be 5,000, alternatively 8,000, alternatively 10,000, alternatively 11,000 g/mol. The upper endpoint of $M_w$ may be 50,000, alternatively 40,000, alternatively 30,000, alternatively 20,000 g/mol. The LMW polyethylene component may be made with catalyst prepared by activating a metallocene ligand-Group 4 metal complex.

Polyethylene. A macromolecule, or collection of macromolecules, composed of repeat units wherein 50 to 100 mole percent (mol%), alternatively 70 to 100 mol%, alternatively 80 to 100 mol%, alternatively 90 to 100 mol%, alternatively 95 to 100 mol%, alternatively any one of the foregoing ranges wherein the upper endpoint is < 100 mol%, of such repeat units are derived from ethylene monomer, and, in aspects wherein there are less than 100 mol% ethylenic repeat units, the remaining repeat units are comonomeric units derived from at least one $(C_3\text{-}C_{20})$alpha-olefin; or collection of such macromolecules. Linear medium density polyethylene (PE). The macromolecule having a substantially linear structure.

Procatalyst. Also referred to as a precatalyst or catalyst compound (as opposed to active catalyst compound), generally a material, compound, or combination of compounds that exhibits no or extremely low polymerization activity (e.g., catalyst efficiency may be from 0 or < 1,000) in the absence of an activator, but upon activation with an activator yields a catalyst that shows at least 10 times greater catalyst efficiency than that, if any, of the procatalyst.

Resolved (GPC chromatogram). A molecular weight distribution having two peaks separated by an intervening local minimum. For example, a resolved GPC chromatogram of the inventive copolymers represented by a plot of dW/dlog(MW) versus log(MW) that features local maxima dW/dlog(MW) values for the LMW and HMW polyethylene component peaks, and a local minimum dW/dlog(MW) value at a log(MW) between the maxima. The at least some separation of the peaks for the LMW and HMW polyethylene components in the chromatogram of the GPC. Typically the separation may not be down to baseline.

Start-up or restart of the polymerization reactor(s) illustrated with a fluidized bed reactor. The start-up of a recommissioned fluidized bed reactor (cold start) or restart of a transitioning fluidized bed reactor (warm start/transition) includes a time period that is prior to reaching the (co)polymerizing conditions. Start-up or restart may include the use of a seedbed preloaded or loaded, respectively, into the fluidized bed reactor. The seedbed may be composed of powder of polyethylene. The polyethylene of the seedbed may be a MDPE, alternatively a PE, alternatively a bimodal PE, alternatively a previously made embodiment of the CB-free bimodal PE composition.

Start-up or restart of the fluidized bed reactor may also include gas atmosphere transitions comprising purging air or other unwanted gas(es) from the reactor with a dry (anhydrous) inert purge gas, followed by purging the dry inert purge gas from the reactor with dry ethylene gas. The dry inert purge gas may consist essentially of molecular nitrogen ($N_2$), argon, helium, or a mixture of any two or more thereof. When not in operation, prior to start-up (cold start), the fluidized bed reactor contains an atmosphere of air. The dry inert purge gas may be used to sweep the air from a recommissioned fluidized bed reactor during early stages of start-up to give a fluidized bed reactor having an atmosphere consisting of the dry inert purge gas. Prior to restart (e.g., after a change in seedbeds or prior to a change in alpha-olefin comonomer), a transitioning fluidized bed reactor may contain an atmosphere of unwanted alpha-olefin, unwanted ICA or other unwanted gas or vapor. The dry inert purge gas may be used to sweep the unwanted vapor or gas from the transitioning fluidized bed reactor during early stages of restart to give the fluidized bed reactor having an atmosphere consisting of the dry inert purge gas. Any dry inert purge gas may itself be swept from the fluidized bed reactor with the dry ethylene gas. The dry ethylene gas may further contain molecular hydrogen gas such that the dry ethylene gas is fed into the fluidized bed reactor as a mixture thereof. Alternatively the dry molecular hydrogen gas may be introduced separately and after the atmosphere of the fluidized bed reactor has been transitioned to ethylene. The gas atmosphere transitions may be done prior to, during, or after heating the fluidized bed reactor to the reaction temperature of the (co)polymerizing conditions.

Start-up or restart of the fluidized bed reactor also includes introducing feeds of reactants and reagents thereinto. The reactants include the ethylene and the alpha-olefin. The reagents fed into the fluidized bed reactor include the molecular hydrogen gas and, optionally, the induced condensing agent (ICA) and the mixture of the bimodal catalyst system and the trim solution.

Trim solution. Any one of the metallocene procatalyst compounds or the non-metallocene procatalyst compounds described earlier dissolved in the inert liquid solvent (e.g., liquid alkane). The trim solution is mixed with the bimodal catalyst system to make the mixture, and the mixture is used in the polymerization reaction to modify at least one property of the CB-free bimodal PE composition made thereby. Examples of such at least one property are density, melt index MI2, flow index FI21, melt flow ratio, and molecular mass dispersity ($M_w/M_n$), $Đ_M$. The mixture of the bimodal catalyst system and the trim solution may be fed into the polymerization reactor(s) in "wet mode", alternatively may be devolatilized and fed in "dry mode". The dry mode is fed in the form of a dry powder or granules. When mixture contains a solid support, the wet mode is fed in the form of a suspension or slurry. In some aspects the inert liquid is a liquid alkane such as heptane.

Ziegler-Natta catalysts. Heterogeneous materials that enhance olefin polymerization reaction rates and typically are products that are prepared by contacting inorganic titanium compounds, such as titanium halides supported on a magnesium chloride support, with an activator. The activator may be an alkylaluminum activator such as triethylaluminum (TEA), triisobutylaluminum (TIBA), diethylaluminum chloride (DEAC), diethylaluminum ethoxide (DEAE), or ethylaluminum dichloride (EADC).

The making of the carbon black-containing bimodal polyethylene composition ("CB bimodal PE composition") comprises melt compounding the CB-free bimodal PE composition with carbon black. The solid form of the CB-free bimodal PE composition used in the compounding step may be powder, granules, or pellets. The melt compounding may be performed by any method comprising melting the solid form of the CB-free bimodal PE composition to make a melt (liquid form) of the CB-free bimodal PE composition, and mixing the carbon black and the melt of the CB-free bimodal PE composition together to give a melt mixture thereof, and cooling the melt mixture to give the CB bimodal PE composition. The melt compounding may be done in a melt mixer or extruder. The making of the CB bimodal PE composition may further comprise pelletizing the CB bimodal PE composition to give the CB bimodal PE composition in the form of pellets. All properties of the CB bimodal PE composition are measured directly with the CB bimodal PE composition, i.e., after the melt compounding step (not before melt compounding step with the CB-free bimodal PE composition).

Carbon black or CB: a finely-divided form of paracrystalline carbon having a high surface area-to-volume ratio, but lower than that of activated carbon. Examples of carbon black are furnace carbon black, acetylene carbon black, conductive carbons (e.g., carbon fibers, carbon nanotubes, graphene, graphites, and expanded graphite platelets. The carbon black may be provided to the melt compounding step as a carbon black masterbatch that is a formulation of poly(1-butene-co-ethylene) copolymer (from ≥ 95 wt% to < 100 wt% of the total weight of the masterbatch) and carbon black (from > 0 wt% to ≤ 5 wt% of the total weight of the masterbatch. Examples of carbon black (commercial suppliers) are Printex XE2 carbon black (DeGussa), Black Pearls 1000 carbon black (Cabot Corp.), Vulcan XC 72 carbon black (Cabot Corp.), Ketjenblack EC600JD carbon black (Akzo), Vulcan P carbon black (Cabot Corp.), United 120 carbon black (Cabot Corp.), Denka Black carbon black (Denka), Vulcan XC 500 carbon black, and Acetylene Black AB 100%-01 carbon black (Soltex).

The inventive CB bimodal PE composition may comprise 0, 1, 2, or more than two additives in addition to carbon black. These additives may be added to the CB-free bimodal PE composition or to the CB bimodal PE composition by melt compounding the CB-free bimodal PE composition or the CB bimodal PE composition, respectively, with the additional additive(s) in a mixer or extruder. Suitable additives may be chosen from an antioxidant, a processing aid, a lubricant, a mineral oil, an anti-blocking agent, a coagent, a nucleating agent, a hindered amine light stabilizer, a flame retardant; and a metal deactivator (e.g., oxalyl bis(benzylidene)hydrazide (OABH)). In some aspects the CB-free bimodal PE composition and/or the CB bimodal PE composition contains at least 1, alternatively at least 2 additives other than carbon black and chosen from antioxidants and a processing aid.

Optional additive antioxidant: an organic molecule that inhibits oxidation, or a collection of such molecules. The antioxidant(s) function(s) to provide antioxidizing properties to the CB bimodal PE composition. Examples of suitable antioxidants are bis(4-(1-methyl-1-phenylethyl)phenyl)amine (e.g., NAUGARD 445); 2,2'-methylene-bis(4-methyl-6-t-butylphenol) (e.g., VANOX MBPC); 2,2'-thiobis(2-t-butyl-5-methylphenol (CAS No. 90-66-4; 4,4'-thiobis(2-t-butyl-5-methylphenol) (also known as 4,4'-thiobis(6-tert-butyl-m-cresol), CAS No. 96-69-5, commercially LOWINOX TBM-6); 2,2'-thiobis(6-t-butyl-4-methylphenol (CAS No. 90-66-4, commercially LOWINOX TBP-6); tris[(4-tert-butyl-3-hydroxy-2,6-dimethylphenyl)methyl]-1,3,5-triazine-2,4,6-trione (e.g., CYANOX 1790); pentaerythritol tetrakis(3-(3,5-bis(1,1-dimethylethyl)-4-hydroxyphenyl)propionate (e.g., IRGANOX 1010, CAS Number 6683-19-8); 3,5-bis(1,1-dimethylethyl)-4-hydroxybenzenepropanoic acid 2,2'- thiodiethanediyl ester (e.g., IRGANOX 1035, CAS Number 41484-35-9); distearyl thiodipropionate ("DSTDP"); dilauryl thiodipropionate (e.g., IRGANOX PS 800); stearyl 3-(3,5-di-t-butyl-4-hydroxyphenyl)propionate (e.g., IRGANOX 1076); 2,4-bis(dodecylthiomethyl)-6-methylphenol (IRGANOX 1726); 4,6-bis(octylthiomethyl)-o-cresol (e.g. IRGANOX 1520); 2',3-bis[[3-[3,5-di-tert-butyl-4-hydroxyphenyl]propionyl]] propionohydrazide (IRGANOX 1024); and tris(2,4-di-tert-butylphenyl)phosphite (e.g., IRGAFOS 168). In some aspects the CB bimodal PE composition is free of antioxidant. When present, the antioxidant(s) may be from 0.01 to 1.5 wt%, alternatively 0.05 to 1.2 wt%, alternatively 0.1 to 1.0 wt% of the total weight of the CB bimodal PE composition. In some aspects at least one, alternatively two antioxidant(s) is/are present and chosen from pentaerythritol tetrakis(3-(3,5-bis(1,1-dimethylethyl)-4-hydroxyphenyl)propionate and tris(2,4-di-tert-butylphenyl)phosphite.

Optional additive processing aid. A material useful at low concentrations to broaden extrusion processing capabilities of the CB-free bimodal PE composition and/or the CB bimodal PE composition, as the case may be. May be used to inhibit or reduce die build-up of resin on die, improve colorant dispersion, or reduce gel formation. Examples are fluoropolymers such as DYNAMAR Polymer Processing Additive FX 5911. In some aspects the CB bimodal PE composition is free of processing aid. When present, the processing aid may be from 0.01 to 1.5 wt%, alternatively 0.05 to 1.2 wt%, alternatively 0.1 to 1.0 wt% of the total weight of the CB bimodal PE composition.

Advantageously the CB bimodal PE composition unpredictably has at least one improved property such as, for example, any one of properties (i) to (vi): (i) Hardness Shore D greater than 55, alternatively greater than 60, alternatively from 60.1 to 70 measured according to ASTM D2240-15 (Type D), described later; (ii) an environmental stress crack resistance (ESCR) F50 measured according to ASTM D1693-15 in 10 wt% Igepal CO-630 in water at 50° C. of greater than 1,000 hours, alternatively greater than 2,000 hours, alternatively greater than 5,000 hours; and in some aspects at most 10,000 hours; (iii) a 2% Flexural Secant Modulus (flexural modulus) from 725 to 1,000 megapascals (MPa), alternatively from 729 to 950 MPa, alternatively from 730 to 900 MPa measured according to ASTM D790-17; (iv) an oxidative induction time (OIT) of greater than 40 minutes, alternatively greater than 50 minutes, alternatively greater than 60 minutes, alternatively from 60.0 to 70 minutes at 210° C. as measured by differential scanning calorimetry (DSC) according to OIT Test Method described later; (v) at least two of (i) to (iv); (vi) each of (i) to (iv).

A compound includes all its isotopes and natural abundance and isotopicallyenriched forms. The enriched forms may have medical or anti-counterfeiting uses.

In some aspects any compound, composition, formulation, mixture, or reaction product herein may be free of any one of the chemical elements selected from the group consisting of: H, Li, Be, B, C, N, O, F, Na, Mg, Al, Si, P, S, Cl, K, Ca, Sc, Ti, V, Cr, Mn, Fe, Co, Ni, Cu, Zn, Ga, Ge, As, Se, Br, Rb, Sr, Y, Zr, Nb, Mo, Tc, Ru, Rh, Pd, Ag, Cd, In, Sn, Sb, Te, I, Cs, Ba, Hf, Ta, W, Re, Os, Ir, Pt, Au, Hg, Tl, Pb, Bi, lanthanoids, and actinoids; with the proviso that chemical elements required by the compound, composition, formulation, mixture, or reaction product (e.g., C and H required by a polyolefin or C, H, and O required by an alcohol) are not excluded.

The following apply unless indicated otherwise. Alternatively precedes a distinct embodiment. ASTM means the standards organization, ASTM International, West Conshohocken, Pennsylvania, USA. ISO means the standards organization, International Organization for Standardization, Geneva, Switzerland. Any comparative example is used for illustration purposes only and shall not be prior art. Free of or lacks means a complete absence of; alternatively not detectable. IUPAC is International Union of Pure and Applied Chemistry (IUPAC Secretariat, Research Triangle Park, North Carolina, USA). May confers a permitted choice, not an imperative. Operative means functionally capable or effective. Optional(ly) means is absent (or excluded), alternatively is present (or included). PPM are weight based. Ranges include endpoints, subranges, and whole and/or fractional values subsumed therein, except a range of integers does not include fractional values. Room temperature: 23° C. ± 1° C. Substituted when referring to a compound means having, in place of hydrogen, one or more substituents, up to and including per substitution.

Bimodality Test Method: determine presence or absence of resolved bimodality by plotting dWf/dLogM (mass detector response) on y-axis versus LogM on the x-axis to obtain a GPC chromatogram curve containing local maxima log(MW) values for LMW and HMW polyethylene component peaks, and observing the presence or absence of a local minimum between the LMW and HMW polyethylene component peaks. The dWf is change in weight fraction, dLogM is also referred to as dLog(MW) and is change in logarithm of molecular weight, and LogM is also referred to as Log(MW) and is logarithm of molecular weight.

Deconvoluting Test Method: segment the chromatogram obtained using the Bimodality Test Method into nine (9) Schulz-Flory molecular weight distributions. Such deconvolution method is described in US 6,534,604. Assign the lowest four MW distributions to the LMW polyethylene component and the five highest MW distributions to the HMW polyethylene component. Determine the respective weight percents (wt%) for each of the LMW and HMW polyethylene components in the CB bimodal PE composition by using summed values of the weight fractions (Wf) of the LMW and HMW polyethylene components and the respective number average molecular weights ($M_n$) and weight average molecular weights ($M_w$) by known mathematical treatment of aggregated Schulz-Flory MW distributions.

Density Test Method: measured according to ASTM D792-13, *Standard Test Methods for Density and Specific Gravity (Relative Density) of Plastics by Displacement,* Method B (for testing solid plastics in liquids other than water, e.g., in liquid 2-propanol). Report results in units of grams per cubic centimeter (g/cm$^3$).

Environmental Stress Crack Resistance (ESCR) F50 Test Method: measured according to ASTM D1693-15, *Standard Test Method for Environmental Stress-Cracking of Ethylene Plastics,* Method B. Igepal CO-630 is used at 10 wt% in water at 50° C. Igepal CO-630 (CAS No. 68412-54-4) is a polyoxyethylene nonylphenyl ether, branched, wherein the polyoxyethylene is of linear formula $(C_2H_4O)_n$, wherein subscript m is on average from 9 to 10; and has a number average molecular weight of 617 g/mol. Testing is carried out on 10 (or more) molded specimens having a thickness of either 0.32 cm (1/8 inch) or 1.94 cm (3/4 inch), a length of 3.81 cm (1.5 inch), and width of 1,27 cm (0.5 inch). The thickness of each specimen is 0.191 cm (0.075 inch), as per ASTM D1693-15, Method B. The length defines a long axis of the test specimen. Using a mounted razor blade, a surface cut of specified length and depth is made on the test specimen parallel to its long axis. The resulting cut specimens are then stressed by being bent at 180 degrees, and then the bent specimens are placed in a rack that is immersed in a test tube containing the 10 wt% Igepal CO-630 in water at 50° C. Periodically the immersed specimens are visually inspected for cracks perpendicular to the cuts, and the number of failures (the number of test specimens having perpendicular cracks) is recorded. The test failure point is when half of the total number of test specimens shows cracking in direction perpendicular to the cuts. The length of time in hours that has elapsed from initial immersion to the test failure point is recorded as the ESCR F50.

Flow Index (190° C., 21.6 kg, "$FO_{21}$", high load melt index) Test Method: use ASTM D1238-13, *Standard Test Method for Melt Flow Rates of Thermoplastics by Extrusion Platometer,* using conditions of 190° C./21.6 kilograms (kg). Report results in units of grams eluted per 10 minutes (g/10 min.) or the equivalent in decigrams per 1.0 minute (dg/1 min.).

Gel permeation chromatography (GPC) Method: Weight-Average Molecular Weight Test Method: determine $M_w$, number average molecular weight ($M_n$), and $M_w/M_n$ using chromatograms obtained on a High Temperature Gel Permeation Chromatography instrument (HTGPC, Polymer Laboratories). The HTGPC is equipped with transfer lines, a differential refractive index detector (DRI), and three Polymer Laboratories PLgel 10$\mu$m Mixed-B columns, all contained in an oven maintained at 160° C. Method uses a solvent composed of BHT-treated TCB at nominal flow rate of 1.0 milliliter per minute (mL/min.) and a nominal injection volume of 300 microliters ($\mu$L). Prepare the solvent by dissolving 6 grams of butylated hydroxytoluene (BHT, antioxidant) in 4 liters (L) of reagent grade 1,2,4-trichlorobenzene (TCB), and filtering the resulting solution through a 0.1 micrometer ($\mu$m) Teflon filter to give the solvent. Degas the solvent with an inline degasser before it enters the HTGPC instrument. Calibrate the columns with a series of monodispersed polystyrene (PS) standards. Separately, prepare known concentrations of test polymer dissolved in solvent by heating known amounts thereof in known volumes of solvent at 160° C. with continuous shaking for 2 hours to give solutions. (Measure all quantities gravimetrically.) Target solution concentrations, c, of test polymer of from 0.5 to 2.0 milligrams polymer per milliliter solution (mg/mL), with lower concentrations, c, being used for higher molecular weight polymers. Prior to running each sample, purge the DRI detector. Then increase flow rate in the apparatus to 1.0 mL/min/, and allow the DRI detector to stabilize for 8 hours before injecting the first sample. Calculate $M_w$ and $M_n$ using universal calibration relationships with the column calibrations. Calculate MW at each elution volume with following equation:

$$\log M_X = \frac{\log(K_X / K_{PS})}{a_X + 1} + \frac{a_{PS} + 1}{a_X + 1} \log M_{PS}$$, where subscript "X" stands for the test sample, subscript "PS" stands for PS standards, $a_{PS} = 0.67$, $K_{PS} = 0.000175$, and $a_X$ and $K_X$ are obtained from published literature. For polyethylenes, $a_X/K_X = 0.695/0.000579$. For polypropylenes $a_X/K_X = 0.705/0.0002288$. At each point in the resulting chromatogram, calculate concentration, c, from a baseline-subtracted DRI signal, $I_{DRI}$, using the following equation: c = $K_{DRI}I_{DRI}$/(dn/dc), wherein $K_{DRI}$ is a constant determined by calibrating the DRI, / indicates division, and dn/dc is the refractive index increment for the polymer. For polyethylene, dn/dc = 0.109. Calculate mass recovery of polymer from the ratio of the integrated area of the chromatogram of concentration chromatography over elution volume and the injection mass which is equal to the pre-determined concentration multiplied by injection loop volume. Report all molecular weights in grams per mole (g/mol) unless otherwise noted. Further details regarding methods of determining Mw, Mn, MWD are described in US 2006/0173123 page 24-25, paragraphs [0334] to [0341]. Plot of dW/dLog(MW) on the versus Log(MW) on the x-axis to give a GPC chromatogram, wherein Log(MW) and dW/dLog(MW) are as defined above.

Hardness Shore D Test Method: use ASTM D2240-15, *Standard Test Method for Rubber Property-Durometer Hardness,* using a Presser Foot Type D Indentor.

Long Chain Branching (LCB) Test Method: calculate number of long chain branches (LCB) per 1,000 carbon atoms of a test polymer using a correlation developed by Janzen and Colby (J. Mol. Struct., 485/486, 569-584 (1999)) between zero shear viscosity, $\eta_o$, and $M_w$. Their correlation is drawn as a reference line on a reference graph of $\eta_o$ on the and $M_w$ on the x-axis. Then a test polymer is characterized by (a) and (b): (a) using the Zero Shear Viscosity Determination Method described later, measuring the test polymer's small-strain (10%) oscillatory shear, and using a three parameter Carreau-Yasuda empirical model ("CY Model") to determine values for $\eta_o$ therefrom; and (b) using the GPC Test Method described earlier, measuring the test polymer's $M_w$. Plot the results for the test polymer's $\eta_o$ and $M_w$ on the reference graph, and compare them to the reference line. Results for test polymers with zero (0) long chain branching per 1,000 carbon atoms will plot below the Janzen and Colby reference line, whereas results for test polymers having long chain branching > 0 per 1,000 carbon atoms will plot above the Janzen and Colby reference line. The CY Model is well-known from R. B. Bird, R. C. Armstrong, & O. Hasseger, Dynamics of Polymeric Liquids, Volume 1, Fluid Mechanics, 2nd Edition, John Wiley & Sons, 1987; C. A. Hieber & H. H. Chiang, Rheol. Acta, 1989, 28: 321; and C. A. Hieber & H. H. Chiang, Polym. Eng. Sci., 1992, 32: 931.

Melt Flow Ratio (190° C., "$I_{21}/I_2$") Test Method: calculated by dividing the value from the Flow Index $I_{21}$ Test Method by the value from the Melt Index $I_2$ Test Method.

Melt Index (190° C., 2.16 kilograms (kg), "$MI_2$" or "$I_2$") Test Method: for ethylene-based (co)polymer is measured according to ASTM D1238-13, using conditions of 190° C./2.16 kg, formerly known as "Condition E" and also known as $I_2$. Report results in units of grams eluted per 10 minutes (g/10 min.) or the equivalent in decigrams per 1.0 minute (dg/1 min.). 10.0 dg = 1.00 g. Melt index is inversely proportional to the weight average molecular weight of the polyethylene, although the inverse proportionality is not linear. Thus, the higher the molecular weight, the lower the melt index.

Melt Index (190° C., 5.0 kilograms (kg), "$MI_5$" or "$I_5$") Test Method: for ethylene-based (co)polymer is measured according to ASTM D1238-13, using conditions of 190° C./5.0 kg, formerly known as "Condition E" and also known as $I_5$. Report results in units of grams eluted per 10 minutes (g/10 min.).

Oxidative Induction Time (OIT) Test Method ($O_2$, 210° C.): Measures the time required to initiate oxidation of a test sample of a polyolefin composition, made by the Compression Molded Plaque Preparation Method, under molecular oxygen atmosphere at 210° C. in a differential scanning calorimeter (DSC). Used TA Instruments Thermal Analysis Q-1000 DSC unit equipped with a Module DSC Standard Cell. Cut approximately 2 mg of test sample into thin slices using a razor blade. Placed sliced test sample into an open aluminum DSC pan. Equilibrated pan/contents at 60° C. for 5 minutes under nitrogen gas flowing at 50 milliliters per minute (mL/min.). Then under nitrogen gas raised the temperature at 20° C./min. to 210° C., and held at 210° C. for 5 minutes under nitrogen. Then switched the gas over to molecular oxygen, also at a flow rate of 50 mL/min., and recorded the elapsed time in minutes from when the oxygen gas was switched on (Time 0) to the onset of a significant exothermic peak in DSC as the oxidative induction time or OIT ($O_2$, 210° C.). The longer the elapsed time to OIT ($O_2$, 210° C.), the more resistant to oxidative heat aging the test sample.

2% Flexural Secant Modulus Test Method: measured according to ASTM D790-17, *Standard Test Methods for Flexural Properties of Unreinforced and Reinforced Plastics and Electrical Insulating Materials.* Test specimen by 3-point deflection with a standard span of 5.08 cm (2.00 inches) and thickness of 0.32 cm (1/8 inch). Test speed used is 1,27 cm per minute (0.5 inch/min.) with modulus, 1% and 2% secant modulus being recorded. Report results in megapascals (MPa). 1,000.0 pounds per square inch (psi) = 6.8948 MPa.

Zero Shear Viscosity Determination Method: perform small-strain (10%) oscillatory shear measurements on polymer melts at 190° C. using an ARES-G2 Advanced Rheometric Expansion System, from TA Instruments, with parallel-plate geometry to obtain complex viscosity $|\eta^*|$ versus frequency ($\omega$) data. Determine values for the three parameters-zero shear viscosity, $\eta_o$, characteristic viscous relaxation time, $\tau_\eta$, and the breadth parameter, a,-by curve fitting the obtained

$$|\eta^*(\omega)| = \frac{\eta_o}{\left[1 + \left(\tau_\eta \omega\right)^a\right]^{\frac{(1-n)}{a}}}$$

data using the following CY Model: , wherein $|\eta^*(\omega)|$ is magnitude of complex

viscosity, $\eta_o$ is zero shear viscosity, $\tau_\eta$ is viscous relaxation time, a is the breadth parameter, n is power law index, and $\omega$ is angular frequency of oscillatory shear.

EXAMPLES

Bimodal catalyst system 1: consisted essentially of or made from bis(2-pentamethylphenylamido)ethyl)amine zirconium dibenzyl and (tetramethylcyclopentadienyl)(n-propylcyclopentadienyl)zirconium dichloride spray-dried in a 3:1 molar ratio onto CAB-O-SIL TS610, a hydrophobic fumed silica made by surface treating hydrophilic (untreated) fumed silica with dimethyldichlorosilane support, and methylaluminoxane (MAO), and fed into a gas phase polymerization reactor as a slurry in mineral oil. The molar ratio of moles MAO to (moles of bis(2-pentamethylphenylamido)ethyl)amine zirconium dibenzyl + moles (tetramethylcyclopentadienyl)(n-propylcyclopentadienyl)zirconium dichloride) was 140:1.

Comonomer 1: 1-Hexene, used at a molar ratio of 1-hexene/C2 in Table 1.

Ethylene ("C2"): partial pressure of C2 was maintained as described later in Table 1.

Induced condensing agent 1 ("ICA1"): isopentane, used at a mole percent (mol%) concentration in the gas phase of a gas phase reactor relative to the total molar content of gas phase matter. Reported later in Table 1.

Molecular hydrogen gas ("H2"): used at a molar ratio of H2/C2 in Table 1.

Trim solution 1: consisted essentially of or made from (tetramethylcyclopentadienyl)(n-propylcyclopentadienyl) zirconium dimethyl (procatalyst) dissolved in heptane to give a solution having a concentration of 0.7 gram procatalyst per milliliter solution (g/mL).

Reference Examples 1 and 2 (RE1 & RE2): Produced separately the carbon black-free bimodal PE compositions of RE1 and RE2 in a single gas phase polymerization reactor containing a pilot plant scale continuous mode, gas phase fluidized bed reactor with a capacity of producing 22 to 110 kg resin per hour. For an experimental run, preloaded the reactor before startup with a seedbed of granular resin inside. Dried down the reactor with the seedbed below 5 ppm moisture with high purity nitrogen. Then introduced reaction constituent gases to the reactor to build a gas phase condition. At the same time heated the reactor up to the desired temperature. Charged the reactor with hydrogen gas sufficient to produce a molar ratio of hydrogen to ethylene of 0.006 at the reaction conditions, and charged the reactor with 1-hexene to produce a molar ratio of 1-hexene to ethylene of 0.021 at reaction conditions. Pressurized the reactor with ethylene (total pressure = 1.5 MPa (220 psi)) and kept the temperature at 95° C. Once the (co)polymerizing conditions were reached, injected a feed of a slurry of Bimodal Catalyst System1 into the reactor. Meanwhile mixed a trim solution feed with the feed of Bimodal Catalyst System1 to give a mixture thereof, which is then fed into the reactor, wherein mixing was done at varying molar ratios ranging from 1.5 to 2.5 ($Zr_{catalyst}/Zr_{trim}$, mol/mol) to fine tune flow index and melt index of carbon black-free bimodal polyethylene composition ("CB-free bimodal PE composition") to desired target values. Used about three bed turnovers to reach steady-state production of the bimodal polyethylene, thereby giving the embodiment of the CB-free bimodal PE composition (product) of RE1 or RE2, respectively. Collected the CB-free bimodal PE composition of RE1 or RE2, in the form of granular resins, from the reactor's product discharge outlet and characterized its properties. Process operating conditions and parameters are summarized below in Table 1. Properties of the CB-free bimodal PE composition of RE1 and RE2 are summarized later in Table 2.

Table 1: Operating constituents/parameters for Reference Example RE1 and RE2 (outside the scope of the currently claimed invention).

| Reaction Constituent/Parameter | (co)polymerizing condition |
|---|---|
| Reactor | single, continuous-mode, fluidized bed |
| Starting seedbed = granular PE resin | Preloaded in reactor |
| Reactor Purging method | Anhydrous $N_2$ gas |
| Ethylene ("C2") | 1517 kPa partial pressure |
| Comonomer = 1-hexene | molar ratio of 1-hexene/C2 = 0.021 |
| Molecular hydrogen gas ("H2") | molar ratio of H2/C2 = 0.006 |
| Induced condensing agent 1: isopentane | 7.65 mol% |
| Operating temperature | 95° C. |
| Bed weight | 42.2 kg |
| Superficial gas velocity (SGV, meters/second) | 0.54 m/s |

Table 2: properties of Reference CB-free bimodal PE composition of RE1 and RE2.

| Polymer Property Measured | RE1 Result Avg.* | RE2 Result Avg.** |
|---|---|---|
| Resolved Bimodality (GPC local minimum) | Yes, at 4.65 LogM | Yes, at 4.52 LogM |

(continued)

| Polymer Property Measured | RE1 Result Avg.* | RE2 Result Avg.** |
|---|---|---|
| Density (ASTM D792-13) | 0.940 g/cm$^3$ | 0.949 g/cm$^3$ |
| Melt Index MI$_2$ (190° C., 2.16 kg, ASTM D1238-04) | 0.54 g/10 min. | Not measured |
| Melt Index MI$_5$ (190° C., 5.0 kg, ASTM D1238-04) | 2.2 g/10 min. | 0.97 g/10 min. |
| Flow Index FI$_{21}$ (190° C., 21.6 kg, ASTM D1238-04) | 70.4 g/10 min. | 24.3 g/10 min. |
| Melt Flow Ratio (MI$_{21}$/M$_2$) | 123.5 | Not determined |
| *Average of 4 lots of RE1. **Average of 8 lots of RE2. | | |

Inventive Examples 1A and 2A (IE1A & IE2A): carbon black-containing bimodal PE compositions. Granular resins of the carbon black-free bimodal PE compositions of RE1 and RE2 were compounded in a twin-screw extruder with antioxidant's IRGANOX 1010 (2,000 parts per million (weight); "ppm") and IRGAFOS 168 (1,200 ppm), a fluoropolymer processing aid DYNAMAR FX 5911 (550 ppm), and a 40% carbon black masterbatch PLASBLAK LL 2590 (6.5 wt%), and pelletized to give carbon black-containing bimodal PE compositions IE1A and IE2A, respectively, in the form of pellets. Properties of the CB bimodal PE compositions of IE1A and IE2A, each containing 2.6 wt% carbon black, are summarized below in Table 3.

Table 3: properties of inventive CB bimodal PE composition of IE1A and IE2A.

| Polymer Property Measured | IE1A Result | IE2A Result |
|---|---|---|
| Density (ASTM D792-13) | 0.9521 g/cm$^3$ | 0.962 g/cm$^3$ |
| Melt Index MI$_2$ (190° C., 2.16 kg, ASTM D1238-04) | 0.57 g/10 min. | 0.25 g/10 min. |
| Flow Index FI$_{21}$ (190° C., 21.6 kg, ASTM D1238-04) | 67.9 g/10 min. | 20.4 g/10 min. |
| Melt Flow Ratio (MI$_{21}$/M$_2$) | 119 | 82.3 |
| Composition Number-average molecular weight (M$_n$) | 7,907 g/mol | 8,939 g/mol |
| Composition Weight-average molecular weight (M$_w$) | 154,512 g/mol | 190,226 g/mol |
| Composition Molecular mass dispersity (M$_w$/M$_n$), D$_M$ | 19.5 | 21.3 |
| Resolved Bimodality (GPC local minimum) | Yes, at 4.65 LogM | Yes, at 4.52 LogM |
| LMW Polyethylene Component Concentration (wt%) | 54.5 | 44.6 |
| HMW Polyethylene Component Concentration (wt%) | 45.5 | 55.4 |
| LMW Polyethylene Component M$_n$ | 4,469 g/mol | 4,201 g/mol |
| HMW Polyethylene Component M$_n$ | 79,821 g/mol | 77,646 g/mol |
| LMW Polyethylene Component M$_w$ | 11,190 g/mol | 11,067 g/mol |
| HMW Polyethylene Component M$_w$ (g/mol) | 322,810 g/mol | 332,606 g/mol |
| Long Chain Branching (LCB) Index | No LCB detected | No LCB detected |
| OIT (DSC, 210° C.) | 63.6 minutes | 60.6 minutes |
| ESCR F50 (10 wt% Igepal CO-630 in water at 50° C.) | > 1,000 hours | > 1,000 hours |
| Hardness Shore D | 61.1 | 59.8 |
| 2% Flexural Secant modulus | 732 MPa | 870 MPa |

As shown by the embodiments IE1A and IE2A, the CB bimodal PE composition has at least one of the limitations (i) to (vi): (i) Hardness Shore D greater than 55, alternatively greater than 60, alternatively from 60.1 to 70 measured according to ASTM D2240-15 (Type D); (ii) an environmental stress crack resistance (ESCR) F50 measured according to ASTM D1693-15 (10 wt% Igepal CO-630 in water at 50° C.) of greater than 1,000 hours, alternatively greater than 2,000 hours, alternatively greater than 5,000 hours, and in some aspects at most 10,000 hours; (iii) a 2% Flexural Secant Modulus (flexural modulus) from 725 to 1,000 megapascals (MPa), alternatively from 729 to 950 MPa, alternatively from 730 to 900 MPa measured according to ASTM D790-17; (iv) an oxidative induction time (OIT) of greater than 40 minutes, alternatively greater than 50 minutes, alternatively greater than 60 minutes, alternatively from 60.0 to 70 minutes at 210° C. as measured by differential scanning calorimetry (DSC) according to OIT Test Method; (v) at least two of (i) to (iv); (vi) each of (i) to (iv).

**Claims**

1. A carbon black-containing bimodal polyethylene composition comprising carbon black and a lower molecular weight (LMW) polyethylene component and a higher molecular weight (HMW) polyethylene component, wherein each of the LMW and HMW polyethylene components comprises ethylene-derived monomeric units and $(C_3-C_{20})$alpha-olefin-derived comonomeric units; and wherein the carbon black-containing bimodal polyethylene composition is **characterized by** each of limitations (a) to (d): (a) a resolved bimodality (resolved molecular weight distribution) showing in a chromatogram of gel permeation chromatography (GPC) of the carbon black-containing bimodal polyethylene composition, wherein the chromatogram shows a peak representing the HMW polyethylene component, a peak representing the LMW polyethylene component, and a local minimum in a range of Log(molecular weight) ("Log(MW)") 3.5 to 5.5 between the Log(MW) peak representing the HMW polyethylene component and the Log(MW) peak representing the LMW polyethylene component, measured according to the Bimodality Test Method; (b) a density from 0.950 to 0.965 gram per cubic centimeter ($g/cm^3$), measured according to ASTM D792-13 Method B; (c) a melt index ($I_2$) of from 0.1 to 1.0 gram per 10 minutes (g/10 min.) measured according to ASTM D1238-13 (190° C., 2.16 kg); and (d) a melt flow ratio ($I_{21}/I_2$) of from 50 to 150, wherein $I_2$ is measured as above and $I_{21}$ is flow index measured according to ASTM D1238-13 (190° C., 21.6 kg); wherein the amount of carbon black is from 1 to 4 weight percent of total weight of the carbon black-containing bimodal polyethylene composition; wherein the carbon black-containing bimodal polyethylene composition is further described by an environmental stress crack resistance (ESCR) F50 measured according to ASTM D1693-15 in 10 weight percent (wt%) Igepal CO-630 in water at 50° C. of greater than 1,000 hours.

2. The carbon black-containing bimodal polyethylene composition of claim 1 **characterized by** an amount of carbon black of from 2 to 3 weight percent based on total weight of the carbon black-containing bimodal polyethylene composition and/or wherein the carbon black-containing bimodal polyethylene composition is further described by any one of limitations (i) to (vi): (i) Hardness Shore D greater than 55 measured according to ASTM D2240-15 (Type D); (ii) (ii) a 2% Flexural Secant Modulus from 725 to 1,000 megapascals (MPa) measured according to ASTM D790-17; (iii) an oxidative induction time (OIT) of greater than 40 minutes at 210° C. as measured by differential scanning calorimetry (DSC) according to the OIT Test Method; (iv) at least two of (i) to (iii); (v) each of (i) to (iii).

3. The carbon black-containing bimodal polyethylene composition of claim 1 further described by any one of limitations (i) to (vii): (i) a molecular mass dispersity ($M_w/M_n$), Đ$_M$ (pronounced D-stroke M), from 5 to 30 measured according to the Gel Permeation Chromatography (GPC) Test Method; (ii) a weight average molecular weight ($M_n$) of the LMW polyethylene component from 4,000 to 5,000 grams per mole (g/mol) and a $M_n$ of the HMW polyethylene component from 70,000 to 90,000 g/mol, measured according to GPC Test Method after deconvoluting the LMW and HMW polyethylene components of the CB bimodal PE composition according to Deconvoluting Test Method; (iii) no measurable amount of long chain branching per 1,000 carbon atoms ("LCB Index"), measured according to LCB Test Method; (iv) both (i) and (ii); (v) both (i) and (iii); (vi) both (ii) and (iii); and (vii) each of (i) to (iii).

4. The carbon black-containing bimodal polyethylene composition of any one of claims 1 to 3 further described by any one of limitations (i) to (iv): (i) the $(C_3-C_{20})$alpha-olefin-derived comonomeric units are derived from 1-butene; (ii) the $(C_3-C_{20})$alpha-olefin-derived comonomeric units are derived from 1-hexene; (iii) the $(C_3-C_{20})$alpha-olefin-derived comonomeric units are derived from 1-octene; and (iv) the $(C_3-C_{20})$alpha-olefin-derived comonomeric units are derived from a combination of any two, alternatively each of 1-butene, 1-hexene, and 1-octene.

5. The carbon black-containing bimodal polyethylene composition of any one of claims 1 to 4 further comprising an antioxidant, a processing aid, or a combination of any two or more thereof.

6. A carbon black-containing bimodal polyethylene composition of any one of claims 1 to 5 made by copolymerizing ethylene (monomer) and at least one $(C_3-C_{20})$alpha-olefin (comonomer) with a mixture of a bimodal catalyst system and a trim solution in the presence of molecular hydrogen gas ($H_2$) and, optionally, an induced condensing agent (ICA) in one, two or more polymerization reactors under (co)polymerizing conditions, thereby making a carbon black-free bimodal polyethylene composition; and melt-compounding the carbon black-free bimodal polyethylene composition with carbon black, thereby making the carbon black-containing bimodal polyethylene composition; wherein prior to being mixed together the trim solution consists essentially of a (tetramethylcyclopentadienyl)(n-propylcyclopentadienyl)zirconium complex and an inert liquid solvent and the bimodal catalyst system consists essentially of an activator species, a bis(2-pentamethylphenylamido)ethyl)amine zirconium complex and a (tetramethylcyclopentadienyl)(n-propylcyclopentadienyl)zirconium complex, all disposed on a solid support; wherein the (co)polymerizing conditions comprise a reaction temperature from 80 degrees (°) to 110° Celsius (C.); a molar ratio of the molecular hydrogen gas to the ethylene (H2/C2 molar ratio) from 0.001 to 0.020; and a molar ratio of the comonomer (Comer) to the ethylene (Comer/C2 molar ratio) from 0.005 to 0.050; and wherein the carbon black-containing bimodal polyethylene composition is further described by an environmental stress crack resistance (ESCR) F50 measured according to ASTM D1693-15 in 10 weight percent (wt%) Igepal CO-630 in water at 50° C. of greater than 1,000 hours.

7.  A method of making a carbon black-containing bimodal polyethylene composition of any one of claims 1 to 5, the method comprising contacting ethylene (monomer) and at least one $(C_3-C_{20})$alpha-olefin (comonomer) with a mixture of a bimodal catalyst system and a trim solution in the presence of molecular hydrogen gas $(H_2)$ and, optionally, an induced condensing agent (ICA) in one polymerization reactor under (co)polymerizing conditions, thereby making a carbon black-free bimodal polyethylene composition, and separately melt compounding the carbon black-free bimodal polyethylene composition with carbon black, thereby making the carbon black-containing bimodal polyethylene composition; wherein the trim solution consists essentially of a (tetramethylcyclopentadienyl)(n-propylcyclopentadienyl)zirconium complex and an inert liquid solvent and the bimodal catalyst system consists essentially of an activator species, a non-metallocene ligand-Group 4 metal complex and a metallocene ligand-Group 4 metal complex, all disposed on a solid support; and wherein the (co)polymerizing conditions comprise a reaction temperature from 80 degrees (°) to 110° Celsius (C.); a molar ratio of the molecular hydrogen gas to the ethylene (H2/C2 molar ratio) from 0.001 to 0.050; and a molar ratio of the comonomer (Comer) to the ethylene (Comer/C2 molar ratio) from 0.005 to 0.10; and wherein the carbon black-containing bimodal polyethylene composition is further described by an environmental stress crack resistance (ESCR) F50 measured according to ASTM D1693-15 in 10 weight percent (wt%) Igepal CO-630 in water at 50° C. of greater than 1,000 hours.

8.  The carbon black-containing bimodal polyethylene composition of claim 6 or the method of claim 7 is further described by any one of limitations (i) to (vi) for making the carbon black-free bimodal polyethylene composition: (i) wherein the bimodal catalyst system consists essentially of a bis(2-pentamethylphenylamido)ethyl)amine zirconium complex and a (tetramethylcyclopentadienyl)(n-propylcyclopentadienyl)zirconium complex in a molar ratio thereof from 1.0:1.0 to 5.0:1.0, respectively, and a methylaluminoxane species, all disposed by spray-drying onto the solid support; (ii) wherein the bimodal catalyst system further consists essentially of mineral oil and the solid support is a hydrophobic fumed silica; (iii) wherein the mixture is a suspension of the bimodal catalyst system in mineral oil and the trim solution and wherein the mixture is premade and then fed into the polymerization reactor(s); (iv) wherein the trim solution is made by dissolving (tetramethylcyclopentadienyl)(n-propylcyclopentadienyl)zirconium dimethyl in the inert liquid solvent to give the trim solution; (v) wherein the polymerization reactor(s) is one fluidized bed gas phase reactor and the method is a gas phase polymerization; and (vi) each of (i) to (v).

9.  A manufactured article comprising a shaped form of the carbon black-containing bimodal polyethylene composition of any one of claims 1 to 6.

10. The manufactured article of claim 9 selected from: coatings, films, sheets, extruded articles, and injection molded articles.

11. A coated conduit comprising a pipe and a coating disposed on at least a portion of the pipe, wherein the coating comprises the carbon black-containing bimodal polyethylene composition of claim 1.

**Patentansprüche**

1.  Rußhaltige bimodale Polyethylen-Zusammensetzung umfassend Ruß und eine Polyethylen-Komponente mit niedrigerem Molekulargewicht (LMW) und eine Polyethylen-Komponente mit höherem Molekulargewicht (HMW), wobei jede von der LMW- und der HMW-Polyethylen-Komponente von Ethylen abgeleitete monomere Einheiten und von $(C_3-C_{20})$Alpha-Olefin abgeleitete comonomere Einheiten umfasst; und wobei die rußhaltige bimodale Polyethylen-Zusammensetzung **gekennzeichnet ist durch** jede der Einschränkungen (a) bis (d): (a) eine aufgelöste Bimodalität (aufgelöste Molekulargewichtsverteilung), die in einem Chromatogramm der Gelpermeationschromatographie (GPC) der rußhaltigen bimodalen Polyethylen-Zusammensetzung nachweisbar ist, wobei in dem Chromatogramm bei einer Messung gemäß dem Bimodalitäts-Testverfahren ein Peak, der die HMW-Polyethylen-Komponente repräsentiert, ein Peak, der die LMW-Polyethylen-Komponente repräsentiert, und ein lokales Minimum in einem Bereich von Log(Molekulargewicht) ("Log(MW)") 3,5 bis 5,5 zwischen dem Log(MW)-Peak, der die HMW-Polyethylen-Komponente repräsentiert, und dem Log(MW)-Peak, der die LMW-Polyethylen-Komponente repräsentiert, zu sehen ist; (b) eine Dichte von 0,950 bis 0,965 Gramm pro Kubikzentimeter (g/cm$^3$) bei einer Messung gemäß ASTM D792-13 Verfahren B; (c) einen Schmelzindex ($I_2$) von 0,1 bis 1,0 Gramm pro 10 Minuten (g/10 Min.) bei einer Messung gemäß ASTM D1238-13 (190 °C, 2,16 kg); und (d) ein Schmelzflussverhältnis ($I_{21}/I_2$) von 50 bis 150, wobei $I_2$ wie vorstehend gemessen wird und $I_{21}$ ein Fließindex ist, der gemäß ASTM D1238-13 (190 ° C., 21,6 kg) gemessen wird; wobei die Menge an Ruß 1 bis 4 Gewichtsprozent des Gesamtgewichts der rußhaltigen bimodalen Polyethylen-Zusammensetzung beträgt; wobei die rußhaltige bimodale Polyethylen-Zusammensetzung weiter durch eine Beständigkeit gegen umgebungsbedingte Spannungsrissbildung (ESCR) F50 beschrieben wird, die gemäß ASTM D1693-15 in 10 Gewichtsprozent (Gew.-%) Igepal CO-630 in Wasser bei 50 °C von mehr als 1.000 Stunden gemessen wird.

2. Rußhaltige bimodale Polyethylen-Zusammensetzung nach Anspruch 1, **gekennzeichnet durch** eine Menge an Ruß von 2 bis 3 Gewichtsprozent bezogen auf das Gesamtgewicht der rußhaltigen bimodalen Polyethylen-Zusammensetzung und/oder wobei die rußhaltige bimodale Polyethylen-Zusammensetzung ferner durch eine der Einschränkungen (i) bis (vi) beschrieben wird: (i) Härte Shore D größer als 55 bei einer Messung gemäß ASTM D2240-15 (Typ D); (ii) ein Biegesekantenmodul bei 2 % von 725 bis 1000 Megapascal (MPa) bei einer Messung gemäß ASTM D790-17; (iii) eine oxidative Induktionszeit (OIT) von mehr als 40 Minuten bei 210 °C bei einer Messung mittels Differenzialkalorimetrie (DSC) gemäß dem OIT-Testverfahren; (iv) mindestens zwei von (i) bis (iii); (v) jede von (i) bis (iii).

3. Rußhaltige bimodale Polyethylen-Zusammensetzung nach Anspruch 1, die ferner durch eine der Einschränkungen (i) bis (vii) beschrieben wird: (i) eine Molekularmassendispersität ($M_w/M_n$) Đ$_M$ (ausgesprochen D mit Querstrich M) von 5 bis 30 bei einer Messung gemäß dem Gel-Permeations-Chromatographie-Testverfahren (GPC-Testverfahren); (ii) ein Gewichtsmittel des Molekulargewichts ($M_n$) der LMW-Polyethylen-Komponente von 4.000 bis 5.000 Gramm pro Mol (g/mol) und ein $M_n$ der HMW-Polyethylen-Komponente von 70.000 bis 90.000 g/mol bei einer Messung gemäß dem GPC-Testverfahren nach Dekonvolution der LMW- und der HMW-Polyethylen-Komponente der bimodalen CE-PE-Zusammensetzung gemäß dem Dekonvolutions-Testverfahren; (iii) kein nachweisbares Ausmaß an Langkettenverzweigung pro 1.000 Kohlenstoffatome ("LCB-Index") bei einer Messung gemäß dem LCB-Testverfahren; (iv) sowohl (i) als auch (ii); (v) sowohl (i) als auch (iii); (vi) sowohl (ii) als auch (iii); oder (vii) jedes von (i) bis (iii).

4. Rußhaltige bimodale Polyethylen-Zusammensetzung nach einem der Ansprüche 1 bis 3, die ferner durch eine der Einschränkungen (i) bis (iv) beschrieben wird: (i) die ($C_3$-$C_{20}$)Alpha-Olefin-abgeleiteten comonomeren Einheiten sind von 1-Buten abgeleitet; (ii) die ($C_3$-$C_{20}$)Alpha-olefin-abgeleiteten comonomeren Einheiten sind von 1-Hexen abgeleitet; (iii) die ($C_3$-$C_{20}$)Alpha-olefin-abgeleiteten comonomeren Einheiten sind von 1-Octen abgeleitet; und (iv) die (C3-$C_{20}$)Alpha-olefin-abgeleiteten comonomeren Einheiten sind aus einer Kombination von zweien von 1-Buten, 1-Hexen und 1-Octen, alternativ jedem davon, abgeleitet.

5. Rußhaltige bimodale Polyethylen-Zusammensetzung nach einem der Ansprüche 1 bis 4, ferner umfassend ein Antioxidationsmittel, ein Verarbeitungshilfsmittel oder eine Kombination von zwei oder mehr davon.

6. Rußhaltige bimodale Polyethylen-Zusammensetzung nach einem der Ansprüche 1 bis 5, hergestellt durch Copolymerisieren von Ethylen (Monomer) und mindestens einem ($C_3$-$C_{20}$)Alpha-Olefin (Comonomer) mit einer Mischung aus einem bimodalen Katalysatorsystem und einer Trimmlösung in Gegenwart von molekularem Wasserstoffgas (H$_2$) und, optional, einem induzierten Kondensationsmittel (ICA) in einem, zwei oder mehr Polymerisationsreaktoren unter (Co-)Polymerisierungsbedingungen, wodurch eine rußfreie bimodale Polyethylen-Zusammensetzung hergestellt wird; und Schmelzcompoundieren der rußfreien bimodalen Polyethylen-Zusammensetzung mit Ruß, wodurch die rußhaltige bimodale Polyethylen-Zusammensetzung hergestellt wird; wobei vor dem Zusammenmischen die Trimmlösung im Wesentlichen aus einem (Tetramethylcyclopentadienyl)(n-propylcyclopentadienyl)zirkonium-Komplex und einem inerten flüssigen Lösungsmittel besteht und das bimodale Katalysatorsystem im Wesentlichen aus einer Aktivatorspezies, einem Bis(2-pentamethylphenylamido)ethyl)amin-Zirkonium-Komplex und einem (Tetramethylcyclopentadienyl)(n-propylcyclopentadienyl)zirkonium-Komplex besteht, die alle auf einem festen Träger angeordnet sind; wobei die (Co-)Polymerisationsbedingungen eine Reaktionstemperatur von 80 Grad (°) bis 110 ° Celsius (C); ein Molverhältnis des molekularen Wasserstoffgases zu dem Ethylen (H2/C2-Molverhältnis) von 0,001 bis 0,020; und ein Molverhältnis des Comonomers (Comer) zu dem Ethylen (Comer/C2-Molverhältnis) von 0,005 bis 0,050 umfassen; und wobei die rußhaltige bimodale Polyethylen-Zusammensetzung weiter durch eine Beständigkeit gegen umgebungsbedingte Spannungsrissbildung (ESCR) F50 beschrieben wird, die gemäß ASTM D1693-15 in 10 Gewichtsprozent (Gew.-%) Igepal CO-630 in Wasser bei 50 °C von mehr als 1.000 Stunden gemessen wird.

7. Verfahren zum Herstellen einer rußhaltigen bimodalen Polyethylen-Zusammensetzung nach einem der Ansprüche 1 bis 5, wobei das Verfahren das Kontaktieren von Ethylen (Monomer) und mindestens einem (C$_3$-C$_{20}$)Alpha-Olefin (Comonomer) mit einer Mischung aus einem bimodalen Katalysatorsystem und einer Trimmlösung in Gegenwart von molekularem Wasserstoffgas (H$_2$) und, optional, einem induzierten Kondensationsmittel (ICA) in einem Polymerisationsreaktor unter (Co)polymerisierungsbedingungen, wodurch eine rußfreie bimodale Polyethylen-Zusammensetzung hergestellt wird, und separates Schmelzcompoundieren der rußfreien bimodalen Polyethylen-Zusammensetzung mit Ruß, wodurch die rußhaltige bimodale Polyethylen-Zusammensetzung hergestellt wird, umfasst; wobei die Trimmlösung im Wesentlichen aus einem (Tetramethylcyclopentadienyl)(n-propylcyclopentadienyl)zirkonium-Komplex und einem inerten flüssigen Lösungsmittel besteht und das bimodale Katalysatorsystem im Wesentlichen aus einer Aktivatorspezies, einem Nicht-Metallocen-Ligand-Gruppe-4-Metall-Komplex und einem Metallocen-Ligand-Gruppe-4-Metall-Komplex besteht, die alle auf einem festen Träger angeordnet sind; wobei die (Co-)Polymerisationsbedingungen eine Reaktionstemperatur von 80 Grad (°) bis 110 ° Celsius (C); ein Molverhältnis des molekularen Wasserstoffgases zu dem Ethylen (H2/C2-Molverhältnis) von 0,001 bis 0,050; und ein Molverhältnis des Comonomers (Comer) zu dem Ethylen (Comer/C2-Molverhältnis) von 0,005 bis 0,10 umfassen; und wobei die rußhaltige bimodale Polyethylen-Zusammensetzung weiter durch eine Beständigkeit gegen umgebungsbedingte Spannungsrissbildung (ESCR) F50 beschrieben wird, die gemäß ASTM D1693-15 in 10 Gewichtsprozent (Gew.-%) Igepal CO-630 in Wasser bei 50 °C von mehr als 1.000 Stunden gemessen wird.

8. Rußhaltige bimodale Polyethylen-Zusammensetzung nach Anspruch 6 oder das Verfahren nach Anspruch 7, die weiter beschrieben durch eine der Einschränkungen (i) bis (vi) zur Herstellung der rußfreien bimodalen Polyethylen-Zusammensetzung wird: (i) wobei das bimodale Katalysatorsystem im Wesentlichen jeweils aus einem Bis(2-pentamethylphenylamido)ethyl)amin-Zirkonium-Komplex und einem (Tetramethylcyclopentadienyl)(n-propylcyclopentadienyl)zirkonium-Komplex in einem Molverhältnis davon von 1,0:1,0 bis 5,0:1,0 und einer Methylaluminoxan-Spezies besteht, die alle durch Sprühtrocknung auf dem festen Träger angeordnet sind; (ii) wobei das bimodale Katalysatorsystem ferner im Wesentlichen aus Mineralöl besteht und der feste Träger eine hydrophobe pyrogene Kieselsäure ist; (iii) wobei die Mischung eine Suspension des bimodalen Katalysatorsystems in Mineralöl und der Trimmlösung ist und wobei die Mischung vorher hergestellt und dann in den/die Polymerisationsreaktor(en) eingespeist wird; (iv) wobei die Trimmlösung durch Auflösen von (Tetramethylcyclopentadienyl)(n-propylcyclopentadienyl) zirkonium-Dimethyl in dem inerten flüssigen Lösungsmittel hergestellt wird, sodass sich die Trimmlösung ergibt; (v) wobei der/die Polymerisationsreaktor(en) ein Wirbelschicht-Gasphasenreaktor ist und das Verfahren eine Gasphasenpolymerisation ist; und (vi) jede von (i) bis (v).

9. Hergestelltes Erzeugnis, umfassend eine geformte Ausbildung der rußhaltigen bimodalen Polyethylen-Zusammensetzung nach einem der Ansprüche 1 bis 6.

10. Hergestelltes Erzeugnis nach Anspruch 9, das ausgewählt ist aus:
Beschichtungen, Folien, Verkleidungen, extrudierten Erzeugnissen und Spritzgusserzeugnissen.

11. Beschichtete Leitung umfassend ein Rohr und eine Beschichtung, die auf mindestens einem Abschnitt des Rohrs angeordnet ist, wobei die Beschichtung die rußhaltige bimodale Polyethylen-Zusammensetzung von Anspruch 1 umfasst.

**Revendications**

1. Composition bimodale de polyéthylène contenant du noir de carbone comprenant du noir de carbone et un composant polyéthylène de masse moléculaire plus faible (LMW) et un composant polyéthylène de masse moléculaire plus élevée (HMW), dans laquelle chacun des composants polyéthylène LMW et HMW comprend des motifs monomères dérivés de l'éthylène et des motifs comonomères dérivés d'alpha-oléfine en (C$_3$-C$_{20}$) ; et dans laquelle la composition bimodale de polyéthylène contenant du noir de carbone est **caractérisée par** chacune des limitations (a) à (d) : (a) une bimodalité résolue (distribution résolue des masses moléculaires) apparaissant dans un chromatogramme de chromatographie par perméation de gel (CPG) de la composition bimodale de polyéthylène contenant du noir de carbone, dans laquelle le chromatogramme montre un pic représentant le composant polyéthylène HMW, un pic représentant le composant polyéthylène LMW, et un minimum local compris dans une plage de Log(masse moléculaire) (« Log(MW) ») 3,5 à 5,5 entre le pic Log(MW) représentant le composant polyéthylène HMW et le pic Log(MW) représentant le composant polyéthylène LMW, mesurée selon la méthode d'essai de bimodalité ; (b) une masse volumique allant de 0,950 à 0,965 gramme par centimètre cube (g/cm$^3$), mesurée selon la norme ASTM D792-13, Méthode B ; (c) un indice de fusion (I$_2$) allant de 0,1 à 1,0 gramme pour 10 minutes (g/10 min), mesuré selon la norme ASTM D1238-13 (190 °C, 2,16 kg) ; et (d) un rapport d'écoulement à l'état fondu (I$_{21}$/I$_2$) allant de 50 à 150, dans laquelle I$_2$ est mesuré comme ci-dessus et I$_{21}$ est l'indice d'écoulement mesuré selon la norme ASTM D1238-13 (190 °C, 21,6 kg) ; dans laquelle la quantité de noir de carbone va de 1 à 4 pour cent en poids du total de la composition de polyéthylène bimodale contenant du noir de carbone ; dans laquelle la composition de polyéthylène bimodale contenant du noir de carbone est en outre décrite par une résistance à la fissuration sous contrainte environnementale (ESCR) F50, mesurée selon la norme ASTM D1693-15 dans 10 pour cent en poids (% en poids) d'Igepal CO-630 dans de l'eau à 50 °C, supérieure à 1 000 heures.

2. Composition bimodale de polyéthylène contenant du noir de carbone selon la revendication 1, **caractérisée par** une quantité de noir de carbone allant de 2 à 3 pour cent en poids sur la base du poids total de la composition de polyéthylène bimodale contenant du noir de carbone et/ou dans laquelle la composition de polyéthylène bimodale contenant du noir de carbone est en outre décrite par l'une quelconque des limitations (i) à (vi) : (i) une dureté Shore D supérieure à 55, mesurée selon la norme ASTM D2240-15 (type D) ; (ii) (ii) un module sécant de flexion de 2 % allant de 725 à 1 000 mégapascals (MPa), comme mesuré selon la norme ASTM D790-17 ; (iii) un temps d'induction d'oxydation (OIT) supérieur à 40 minutes à 210 °C, tel que mesuré par calorimétrie différentielle à balayage (DSC) conformément à la méthode d'essai OIT ; (iv) au moins deux de (i) à (iii) ; (v) chacune de (i) à (iii).

3. Composition bimodale de polyéthylène contenant du noir de carbone selon la revendication 1, décrite en outre par l'une quelconque des limitations (i) à (vii) : (i) un degré de dispersion des masses moléculaires (M$_w$/M$_n$), Đ$_M$ (prononcé D barré M), allant de 5 à 30, mesuré selon la méthode d'essai de chromatographie par perméation de gel (GPC) ; (ii) une masse moléculaire moyenne en poids (M$_n$) du composant polyéthylène LMW allant de 4 000 à 5 000 grammes par mole (g/mol) et une M$_n$ du composant polyéthylène HMW allant de 70 000 à 90 000 g/mol, mesurées selon la méthode d'essai GPC après déconvolution des composants polyéthylène LMW et HMW de la composition bimodale PE CB selon la méthode d'essai de déconvolution ; (iii) aucune quantité mesurable de ramification à longue chaîne pour 1 000 atomes de carbone (« indice LCB »), mesurée selon la méthode d'essai LCB ; (iv) à la fois (i) et (ii) ; (v) à la fois (i) et (iii) ; (vi) à la fois (ii) et (iii) ; et (vii) chacune de (i) à (iii).

4. Composition bimodale de polyéthylène contenant du noir de carbone selon l'une quelconque des revendications 1 à 3 décrite en outre par l'une quelconque des limitations (i) à (iv) : (i) les motifs comonomères dérivés d'alpha-oléfine en (C$_3$-C$_{20}$) sont dérivés du 1-butène ; (ii) les motifs comonomères dérivés d'alpha-oléfine en (C$_3$-C$_{20}$) sont dérivés du 1-hexène ; (iii) les motifs comonomères dérivés d'alpha-oléfine en (C$_3$-C$_{20}$) sont dérivés du 1-octène ; et (iv) les motifs comonomères dérivés d'alpha-oléfine en (C$_3$-C$_{20}$) sont dérivés d'une combinaison de deux quelconques, en variante chacun, parmi 1-butène, 1-hexène, et 1-octène.

5. Composition bimodale de polyéthylène contenant du noir de carbone selon l'une quelconque des revendications 1 à 4, comprenant en outre un antioxydant, un auxiliaire de traitement, ou une combinaison de deux quelconques de ceux-ci ou plus.

6. Composition bimodale de polyéthylène contenant du noir de carbone, selon l'une quelconque des revendications 1 à 5, obtenue par copolymérisation d'éthylène (monomère) et d'au moins une alpha-oléfine en (C$_3$-C$_{20}$) (comonomère) avec un mélange d'un système catalytique bimodal et d'une solution d'ajustement en présence d'hydrogène moléculaire gazeux (H$_2$) et, facultativement, d'un agent de condensation induite (ICA) dans un, deux, ou plus de deux réacteurs de polymérisation dans des conditions de (co)polymérisation, permettant ainsi de préparer une composition de polyéthylène bimodale exempte de noir de carbone ; et mélange par fusion de la composition de polyéthylène bimodale exempte de noir de carbone avec du noir de carbone, permettant ainsi de préparer la composition de polyéthylène bimodale contenant du noir de carbone ; dans laquelle, avant d'être mélangée, la solution d'ajustement est sensiblement constituée d'un complexe de (tétraméthylcyclopentadiényl)(n-propylcyclopentadiényl)zirconium et d'un solvant liquide inerte, et le système catalytique bimodal est sensiblement constitué d'une espèce activatrice, d'un complexe de bis(2-pentaméthylphénylamido)éthyl)amine zirconium et d'un complexe de (tétraméthylcyclopentadiényl)(n-propylcyclopentadiényl)zirconium, tous disposés sur un support solide ; dans laquelle les conditions de (co)polymérisation comprennent une température de réaction allant de 80 degrés (°) à 110 °Celsius (C) ; un rapport molaire entre l'hydrogène gazeux moléculaire et l'éthylène (rapport molaire H2/C2) allant de 0,001 à 0,020 ; et un rapport molaire entre le comonomère (Comer) et l'éthylène (rapport molaire Comer/C2) allant de 0,005 à 0,050 ; et dans laquelle la composition de polyéthylène bimodale contenant du noir de carbone est en outre décrite par une résistance à la fissuration sous contrainte environnementale (ESCR) F50, mesurée selon la norme ASTM D1693-15 dans 10 pour cent en poids (% en poids) d'Igepal CO-630 dans de l'eau à 50 °C, supérieure à 1 000 heures.

7. Procédé de préparation d'une composition de polyéthylène bimodale contenant du noir de carbone selon l'une quelconque des revendications 1 à 5, comprenant la mise en contact d'éthylène (monomère) et d'au moins une alpha-oléfine en ($C_3$-$C_{20}$) (comonomère) avec un mélange d'un système catalytique bimodal et d'une solution d'ajustement en présence d'hydrogène moléculaire ($H_2$) et, facultativement, d'un agent de condensation induite (ICA) dans un réacteur de polymérisation dans des conditions de (co)polymérisation, permettant ainsi de préparer ainsi une composition bimodale de polyéthylène exempte de noir de carbone, et le mélange séparé à l'état fondu de la composition bimodale de polyéthylène exempte de noir de carbone avec du noir de carbone, permettant ainsi de préparer la composition bimodale de polyéthylène contenant du noir de carbone ; dans lequel la solution d'ajustement est sensiblement constituée d'un complexe de (tétraméthylcyclopentadiényl)(n-propylcyclopentadiényl)zirconium et d'un solvant liquide inerte et le système catalytique bimodal est sensiblement constitué d'une espèce activatrice, d'un complexe ligand non métallocène-métal du Groupe 4 et d'un complexe ligand métallocène-métal du Groupe 4, tous disposés sur un support solide ; dans lequel les conditions de (co)polymérisation comprennent une température de réaction allant de 80 degrés (°) à 110 °Celsius (C) ; un rapport molaire entre l'hydrogène gazeux moléculaire et l'éthylène (rapport molaire H2/C2) allant de 0,001 à 0,050 ; et un rapport molaire entre le comonomère (Comer) et l'éthylène (rapport molaire Comer/C2) allant de 0,005 à 0,10 ; et dans lequel la composition de polyéthylène bimodale contenant du noir de carbone est en outre décrite par une résistance à la fissuration sous contrainte environnementale (ESCR) F50 mesurée, selon la norme ASTM D1693-15 dans 10 pour cent en poids (% en poids) d'Igepal CO-630 dans de l'eau à 50 °C, supérieure à 1 000 heures.

8. Composition bimodale de polyéthylène contenant du noir de carbone selon la revendication 6 ou procédé selon la revendication 7, décrit en outre par l'une quelconque des limitations (i) à (vi), permettant de préparer la composition bimodale de polyéthylène exempte de noir de carbone : (i) dans lequel le système catalytique bimodal est sensiblement constitué d'un complexe de bis(2-pentaméthylphénylamido)éthyl)amine zirconium et d'un complexe de (tétraméthylcyclopentadiényl)(n-propylcyclopentadiényl)zirconium dans un rapport molaire de ceux-ci allant de 1,0:1,0 à 5,0:1,0, respectivement, et d'une espèce de méthylaluminoxane, tous disposés par séchage par pulvérisation sur le support solide ; (ii) dans lequel le système catalytique bimodal est sensiblement constitué d'huile minérale et le support solide est une silice pyrogénée hydrophobe ; (iii) dans lequel le mélange est une suspension du système catalytique bimodal dans de l'huile minérale et la solution d'ajustement, et dans lequel le mélange est préparé à l'avance, puis introduit dans le(s) réacteur(s) de polymérisation ; (iv) dans lequel la solution d'ajustement est obtenue par dissolution de (tétraméthylcyclopentadiényl)(n-propylcyclopentadiényl)zirconium diméthyle dans le solvant liquide inerte afin d'obtenir la solution d'ajustement ; (v) dans lequel le(s) réacteur(s) de polymérisation est (sont) un réacteur en phase gazeuse à lit fluidisé et le procédé est une polymérisation en phase gazeuse ; et (vi) chacune de (i) à (v).

9. Article manufacturé comprenant une forme profilée de la composition bimodale de polyéthylène contenant du noir de carbone selon l'une quelconque des revendications 1 à 6.

10. Article manufacturé selon la revendication 9 choisi parmi : revêtements, films, feuilles, articles extrudés, et articles moulés par injection.

11. Conduit revêtu comprenant un tuyau et un revêtement disposé sur au moins une partie du tuyau, dans lequel le revêtement comprend la composition bimodale de polyéthylène contenant du noir de carbone selon la revendication 1.

# FIG. 1

# FIG. 2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CA 2427685 A1
- US 20050054790 A1
- US 20150017365 A1
- US 7250473 B2
- US 7576166 B2
- US 7897710 B2
- US 8008403 B2
- US 8846188 B2
- US 8957158 B2
- US 9017784 B2
- US 9090762 B2
- US 9284389 B2
- US 9309338 B2
- WO 2006045738 A1
- WO 2015069637 A2
- US 2007010616 A
- US 2010240818 A
- US 6828395 B
- US 2006036041 A
- WO 2016172567 A
- CA 2871463
- US 7193017 B2
- US 7312279 B2
- US 7858702 B2
- US 7868092 B2
- US 8202940 B2
- US 8378029 B2
- US 3324095 A
- US 4453399 A
- US 4588790 A
- US 4994534 A
- US 5352749 A
- US 5462999 A
- US 6489408 B
- US 3709853 A
- US 4003712 A
- US 4011382 A
- US 4302566 A
- US 4543399 A
- US 4882400 A
- US 5541270 A
- EP 0802202 A
- BE 839380
- US 5627242 A
- US 5665818 A
- US 5677375 A
- EP 0794200 A
- EP 0649992 B1
- EP 634421 B
- US 4988783 A
- US 6534604 B
- US 20060173123 A

**Non-patent literature cited in the description**

- *CHEMICAL ABSTRACTS*, 90-66-4; 4,4
- *CHEMICAL ABSTRACTS*, 96-69-5
- *CHEMICAL ABSTRACTS*, 41484-35-9
- *CHEMICAL ABSTRACTS*, 68412-54-4
- **JANZEN** ; **COLBY**. *J. Mol. Struct*, 1999, 569-584
- **R. B. BIRD** ; **R. C. ARMSTRONG** ; **O. HASSEGER**. Dynamics of Polymeric Liquids. John Wiley & Sons, 1987
- **C. A. HIEBER** ; **H. H. CHIANG**. *Rheol. Acta*, 1989, vol. 28, 321
- **C. A. HIEBER** ; **H. H. CHIANG**. *Polym. Eng. Sci.*, 1992, vol. 32, 931